# EUROPEAN PATENT SPECIFICATION

(11) **EP 2 689 998 B1**
(45) Date of publication and mention of the grant of the patent: **09.09.2015**
(21) Application number: 12760883.4
(22) Date of filing: 22.02.2012
(51) Int. Cl.: B62M 6/70, B62M 6/50, B62M 9/16

(54) **ELECTRIC BICYCLE**
ELEKTRISCHES FAHRRAD
BICYCLETTE ÉLECTRIQUE

(30) Priority: 24.03.2011 JP 2011065112
(43) Date of publication of application: 29.01.2014
(73) Proprietor: Panasonic Corporation, Osaka 571-8501 (JP)
(72) Inventor: MORIOKA, Takahiro, Osaka 540-6207 (JP); MASATO, Tanida, Osaka 540-6207 (JP)
(74) Representative: Grünecker Patent- und Rechtsanwälte PartG mbB
(86) International application number: PCT/JP2012/001176
(87) International publication number: WO 2012/127782

(56) References cited:
- JP-A- 7 215 259
- JP-A- 2000 074 761
- JP-A- 2003 231 492
- JP-A- 2006 341 774
- JP-A- 2007 230 410
- JP-A- 2007 276 603

## Description

### Technical Field

The present invention relates to an electric bicycle and particularly relates to an electric bicycle having a tensioner device.

### Background Art

A known electric bicycle (electrically assisted bicycle) includes a storage device, e.g., a battery and an electric motor that receives power from the storage device. A pedal force applied to a pedal is detected by a pedal force detector such as a torque sensor, and then the auxiliary driving force (assisting force) of the electric motor is added to a human driving force corresponding to the pedal force, allowing smooth riding on an uphill road.

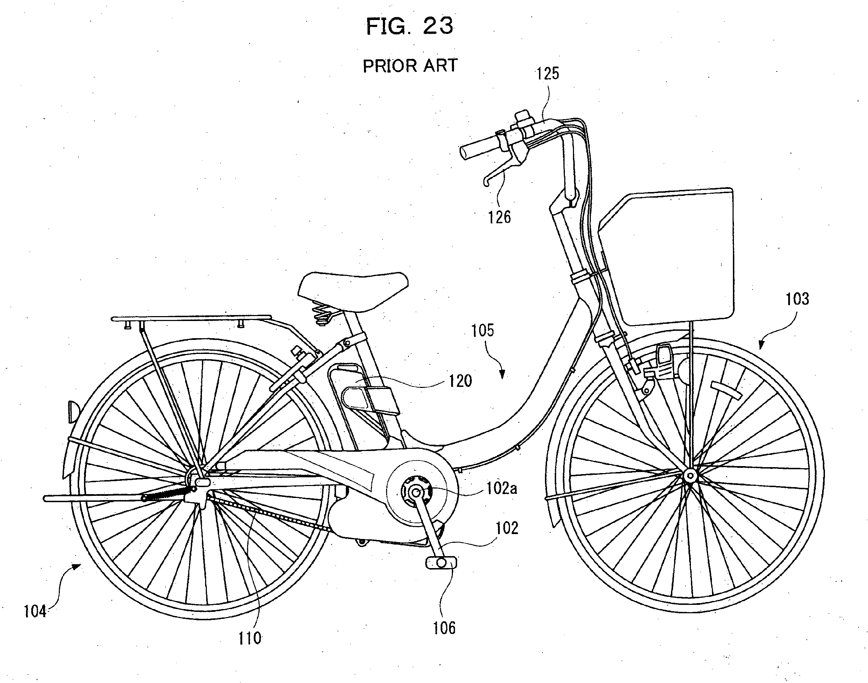

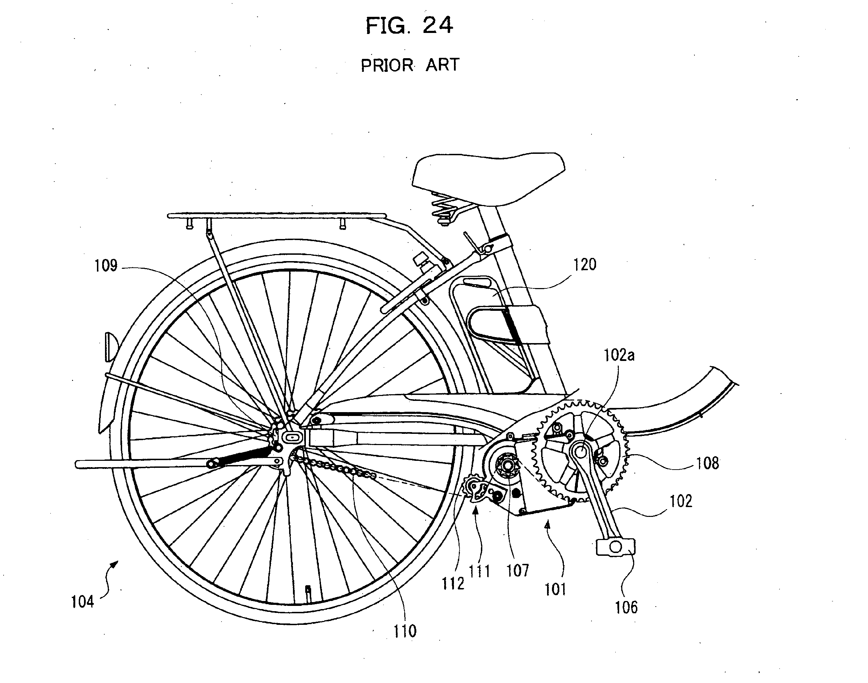

As shown in FIGS. 23 and 24, the electric bicycle includes a motor driving unit 101 placed near a crankshaft 102a, e.g., at the rear of the crankshaft 102a. The motor driving unit 101 accommodates the electric motor for generating an auxiliary driving force. In the electric bicycle configured thus, the motor driving unit 101 having a relatively large weight is located at the center in the longitudinal direction of the electric bicycle (that is, an intermediate position between a front wheel and a rear wheel). As compared with the case where a motor driving unit is accommodated in the hub of a front wheel or a rear wheel, a front wheel 103 and a rear wheel 104 are easily lifted, achieving ease in handling a body 105 of the electric bicycle, for example, riding over a step on a road. Furthermore, the electric bicycle travels with high stability. In FIGS. 23 and 24, reference numeral 102 denotes a crank, reference numeral 106 denotes a pedal, reference numeral 108 denotes a front sprocket (may be called a crank sprocket or a front gear) acting as a human power driving ring body that rotates with the crankshaft 102a, reference numeral 109 denotes a rear sprocket acting as a rear ring body provided on the rear wheel 104, and reference numeral 110 denotes a chain acting as a driving force transmitter looped over the front sprocket 108 and the rear sprocket 109 in an endless manner.

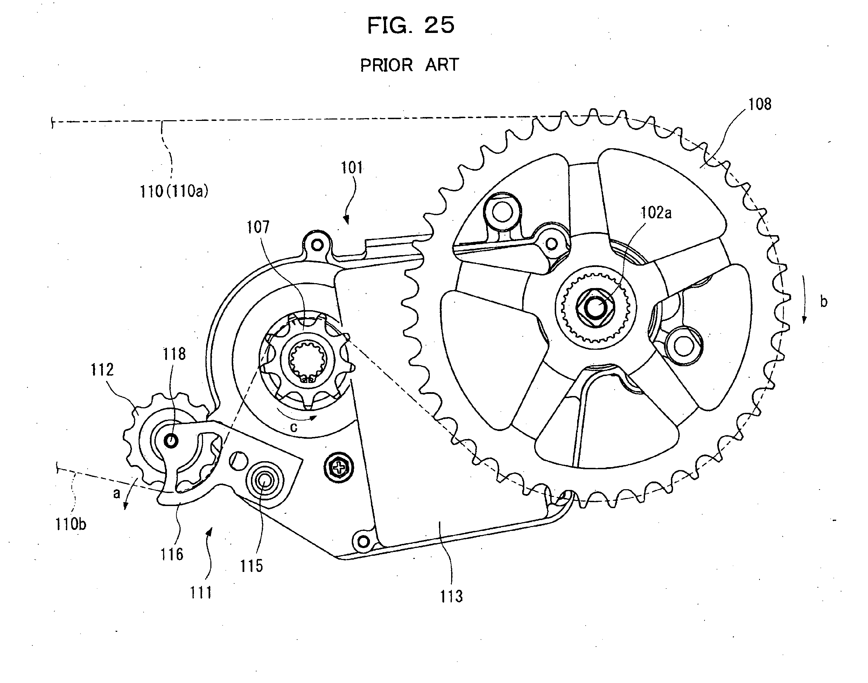

As shown in FIGS. 24 and 25, the motor driving unit 101 includes an auxiliary drive sprocket 107 disposed at the rear of the front sprocket 108 to output the auxiliary driving force of the electric motor. The engagement of the auxiliary drive sprocket 107 with the chain 110 adds an auxiliary driving force to a human driving force and then transmits the driving force to the rear wheel 104. At the rear of the auxiliary drive sprocket 107, a tensioner device (may be called a guide device) 111 is engaged with a lower portion 110b of the chain 110 so as to guide the lower portion 110b downward.

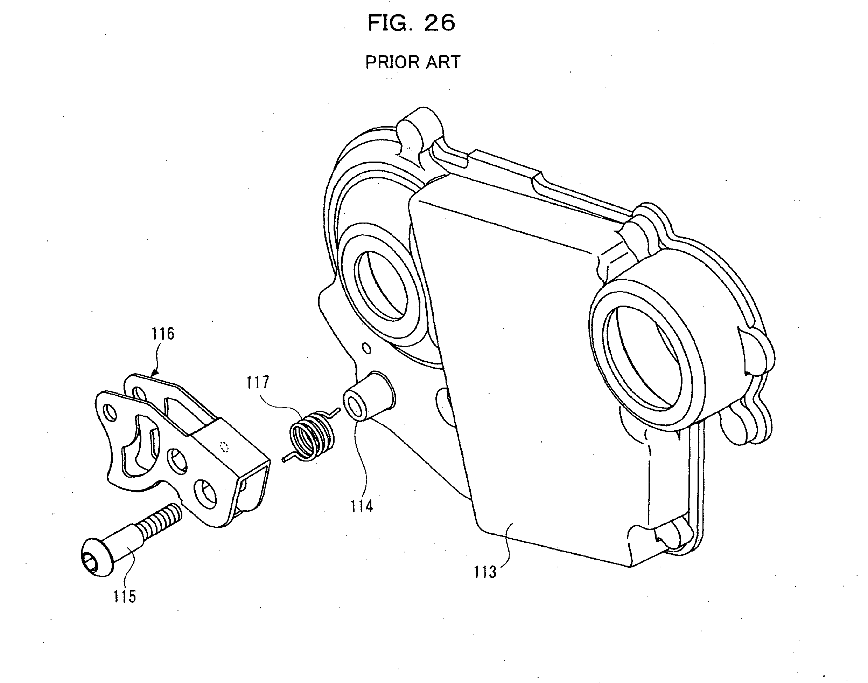

As shown in FIGS. 25 and 26, the tensioner device 111 includes, for example, a boss 114 protruding from a unit case 113 forming the outer case of the motor driving unit 101, a support arm 116 pivotally attached to the protruding end of the boss 114 with a mounting screw 115, a tension sprocket 112 rotatably attached to the pivoting end of the support arm 116 with a support shaft 118, and an urging spring 117 that urges the support arm 116 in the direction of arrow a in FIG. 24. The support arm 116 is urged by the urging force of the urging spring 117 in the direction a such that the tension sprocket 112 can freely pivot about the attached portion of the mounting screw 115 via the support arm 116, that is, the pivot range of the support arm 116 is not regulated.

The tension sprocket 112 provided on the tensioner device 111 guides the chain 110 so as to increase a winding angle for engaging the chain 110 with the auxiliary drive sprocket 107 to a proper angle; meanwhile, the tension sprocket 112 absorbs slack in the chain 110 to keep a proper tension on the chain 110. In this structure, the chain 110 is engaged with the auxiliary drive sprocket 107 at a large winding angle, and a tooth skip caused by slack in the chain 110 is prevented, satisfactorily transmitting the auxiliary driving force of the electric motor to the chain 110.

As shown in FIG. 25, when the pedals 106 are pressed to rotate the front sprocket 108 in direction b, an upper portion 110a of the chain 110 is moved downward by the front sprocket 108 under a tension applied to the front by the front sprocket 108. The chain 110 is then engaged with the auxiliary drive sprocket 107 while being lifted diagonally rearward. After that, the chain 110 is guided diagonally downward by the tension sprocket 112 and then is moved rearward toward the lower portion of the rear sprocket 109. According to a pedal force applied to the pedal 106, the auxiliary drive sprocket 107 is rotated in direction c and receives an auxiliary driving force. Thus, when the pedal 106 is pressed, a tension is applied only to the upper portion 110a of the chain 110 but is hardly applied to the lower portion 110b of the chain 110. Hence, in this state, the tension sprocket 112 pivots in the direction a, allowing the tensioner device 111 to absorb slack on the lower portion 110b of the chain 110.

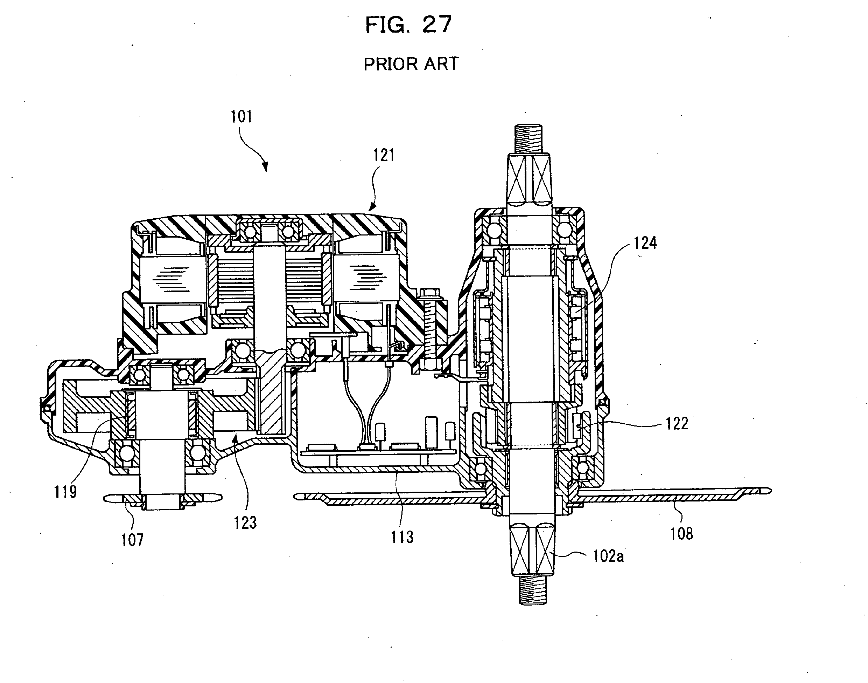

In many cases, an electric bicycle contains, like an ordinary bicycle, a freewheeling mechanism including a one-way clutch mechanism or a ratchet mechanism in the hub of the rear wheel 104. The freewheeling mechanism prevents the pedals 106 from rotating during coasting (also called inertial traveling) in which the pedals 106 are not pressed on a flat area or a downhill. The electric bicycle may be powered off to stop the generation of an auxiliary driving force when a battery 120 becomes extremely weak. Also in this case, as shown in a plane section of the motor driving unit 101 in FIG. 27, a one-way clutch mechanism 119 or a ratchet mechanism is disposed between an electric motor 121 and the auxiliary drive sprocket 107 so as to prevent a load from the electric motor 121 to the pedal 106 from causing an excessive pedal force to the pedal 106. When a rider suddenly stops pressing the pedals 106, the auxiliary drive sprocket 107 may keep rotating. In this case, in order to prevent the rotations of the pedals 106, a human driving force transmission path from the crankshaft 102a to the front sprocket 108 includes a one-way clutch mechanism 122. This prevents an excessive load applied to a rider's foot or prevents the pedals 106 from rotating during coasting. Reference numeral 123 in FIG. 27 denotes a speed reduction mechanism interposed between the electric motor 121 and the auxiliary drive sprocket 107. Reference numeral 124 denotes a torque sensor that detects torque applied to the crankshaft 102a (that is, a human driving force including a pedal force to the pedal 106).

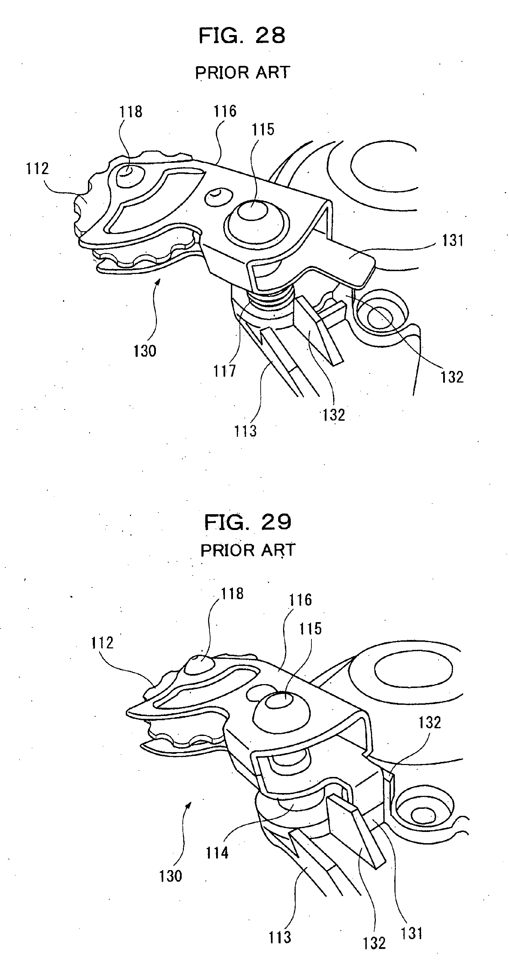

The electric bicycle may include an exterior transmission provided on the rear wheel 104 like an ordinary bicycle. The electric bicycle including an exterior transmission does not need the tensioner device 111 of the motor driving unit 101. The exterior transmission includes a plurality of rear wheel transmission sprockets attached with different diameters to the rear wheel 104, a guide sprocket disposed below the rear wheel transmission sprockets, and a rear tension sprocket that absorbs slack in the chain during a gear change. The rear tension pulley has the function of adjusting the tensile force (tension) of the chain. Since the provided exterior transmission has a tension adjusting function, the motor driving unit 101 does not require a tension adjusting function. However, the absence of the tensioner device 111 leads to an insufficient winding angle of the chain 110 engaged with the auxiliary drive sprocket 107. Patent Literature 1 discloses the configuration of a tensioner device 130 including the constituent elements of the tensioner device 111 as illustrated in FIGS. 28 and 29.

As shown in FIGS. 28 and 29, the tensioner device 130 includes a lug 131 on a part of a support arm 116, the lug 131 being extended in a direction opposite to a tension sprocket 112. The tensioner device 130 further includes a plurality of positioning protrusions 132 on a part of a unit case 113 of a motor driving unit 101, the positioning protrusions 132 protruding in a lateral direction. In the case where the electric bicycle includes the exterior transmission, as shown in FIG. 29, the lug 131 is bent to the unit case 113 so as to be fit between the positioning protrusions 132, fixing the positions of the support arm 116 and the tension sprocket 112 so as to prevent pivoting. In this case, the urging function of the tension sprocket 112 is not necessary and thus an urging spring 117 is not provided. In the case where the electric bicycle does not include the exterior transmission, as shown in FIG. 28, the lug 131 is not bent while being kept from contact with the positioning protrusions 132. In this state, the pivoting range of the support arm 116 and the tension sprocket 112 is not regulated.

In many cases, braking devices used for the electric bicycle include, like an ordinary bicycle, a rim brake, a band brake, or a roller brake that applies a brake by operating a brake lever 126 (FIG. 23) attached to a handlebar 125. A coaster brake that applies a brake by rotating pedals opposite to the forward rotation of the pedals may be required for the rear wheel 104 depending upon regions or rider's demands. Patent Literatures 2 and 3 contain technical data on coaster brakes.

### ) Citation List

### Patent Literatures

Patent Literature 1: Japanese Patent Laid-Open No. 2006-341774
Patent Literature 2: German Patent Publication No. 2337725
Patent Literature 3: Japanese Utility Model Laid-Open No. 61-187788

JP 2007-276603 discloses an electric bicycle having the features of the preamble of claim 1.

### Summary of Invention

### Technical Problems

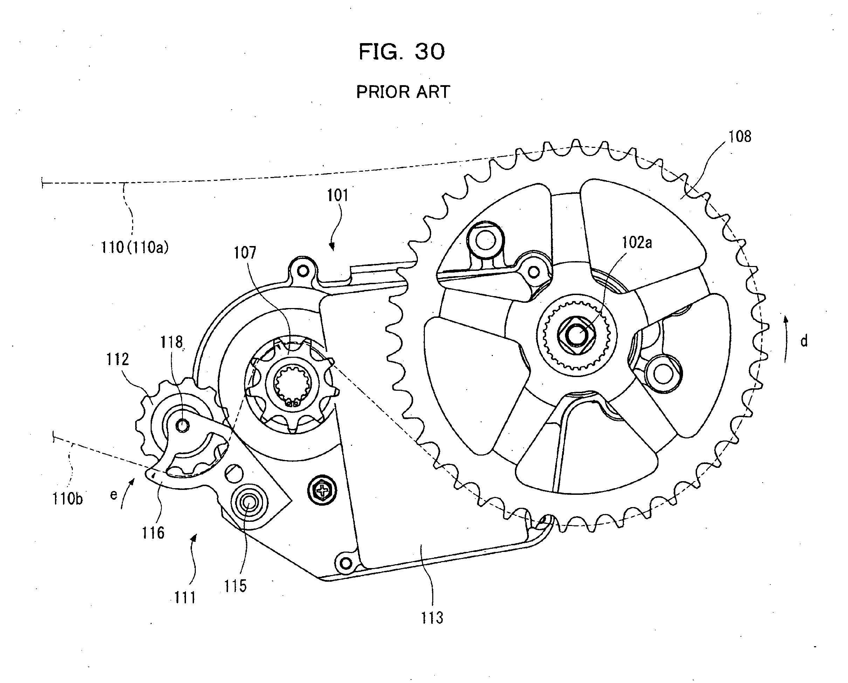

In the attachment of a coaster brake to the rear wheel 104 of the electric bicycle, however, it is necessary to omit the one-way clutch mechanism 122 between the crankshaft 102a and the front sprocket 108, transmit a backward rotation of the pedals 106 to the crankshaft 102a, and further transmit the rotation to the coaster brake through the front sprocket 108, the chain 110, and the rear sprocket 109. In this case, as shown in FIG. 30, the front sprocket 108 rotating backward (direction d) causes a large tension on the lower portion 110b of the chain 110. This considerably moves the tension sprocket 112 upward (direction e), leading to large slack on the upper portion 110a of the chain 110 according to the distance of movement. Hence, the upper portion 110a of the slacked chain 110 may come into contact with the body and so on, or the front sprocket 108 may have a tooth skip or the chain 110 may come off the front sprocket 108 when the coaster brake is released to switch a backward rotation of the crank 102 or the front sprocket 108 to a forward rotation.

Moreover, the chain 110 is stretched by aged deterioration over an extended period of use, leading to large slack. If a tension is applied to the lower portion 110b as well as the upper portion 110a of the chain 110, the slack may increase.

The present invention has been devised to solve the problems. An object of the present invention is to provide an electric bicycle in which a driving force transmitter such as a chain is satisfactorily engaged with an auxiliary driving ring body such as an auxiliary drive sprocket for outputting an auxiliary driving force, and slack in the driving force transmitter can be satisfactorily absorbed in a forward movement or coasting; meanwhile, a tooth skip and disengagement of the driving force transmitter can be prevented even if a large tension is applied to an engaged part of the driving force transmitter with the auxiliary driving ring body or a tension ring body (e.g., the lower portion of the driving force transmitter).

### Solution to Problem

In order to solve the problems, an electric bicycle of the present invention includes: a human power driving ring body that rotates with a crank and outputs a human driving force including a pedal force; a rear ring body provided on a rear wheel; a driving force transmitter rotatably wound around the human power driving ring body and the rear ring body in an endless manner; an electric motor acting as a driving source for generating an auxiliary driving force; an auxiliary driving ring body that receives the auxiliary driving force generated in the electric motor and transmits the auxiliary driving force to the driving force transmitter while being engaged with the driving force transmitter; and a ) tensioner device that increases the winding angle of the driving force transmitter with respect to the auxiliary driving ring body and applies a tension to the driving force transmitter so as to absorb slack on the lower portion of the driving force transmitter, characterized in that the tensioner device includes a tension ring body engaged with the driving force transmitter; a support member pivotally supporting the tension ring body; an urging member that applies an urging force to the tension ring body; and a positioning mechanism that adjustably regulates a limit position (limit range) of movement of the tension ring body when the driving force transmitter receives a tension for moving the tension ring body in a direction opposite to the urging direction of the urging force.

The auxiliary driving ring body and the tension ring body of the electric bicycle of the present invention are engaged with a part of the driving force transmitter on the same side, and the positioning mechanism adjustably regulates the limit position of movement of the tension ring body when a larger tension is applied to the engaged part of the driving force transmitter with the auxiliary driving ring body and the tension ring body than the other part of the driving force transmitter.

With this configuration, a coaster brake assembled to the hub of the rear wheel of the electric bicycle rotates pedals backward to generate a large tension on, for example, the lower portion of the driving force transmitter, applying a tension to the driving force transmitter so as to move the tension ring body in the direction opposite to the urging direction of the urging force. In this case, the positioning mechanism regulates the position of the moving tension ring body, thereby preventing large slack on the upper portion of the driving force transmitter. This can prevent failures, for example, the slacked driving force transmitter in contact with a body and so on, a tooth skip on the human power driving ring body, and disengagement of the driving force transmitter. Since the positioning mechanism can adjust the limit position (limit range) of movement of the tension ring body, the limit position can be adjusted to a proper position even if the driving force transmitter is stretched by aged deterioration over an extended period of use of the electric bicycle. This can prevent failures, for example, the slacked driving force transmitter in contact with the body and so on, a tooth skip on the human power driving ring body, and disengagement of the driving force transmitter.

The electric bicycle of the present invention preferably includes a motor driving unit disposed at an intermediate position between a front wheel and the rear wheel, the motor driving unit being provided with the electric motor and the auxiliary driving ring body. Moreover, the tensioner device is preferably attached to the motor driving unit provided with the electric motor and the auxiliary driving ring body.

For example, the positioning mechanism has a positioning member in contact with the support member pivotally supporting the tension ring body, the positioning member being attached so as to adjust a relative position to the motor driving unit.

When the driving force transmitter has large slack, the positioning mechanism changes the movable position of the tension ring body so as to reduce the slack. With this configuration, the movable position of the tension ring body is automatically changed so as to reduce large slack on the driving force transmitter. Thus, the position of the tension ring body does not need to be manually adjusted.

In this case, the positioning mechanism preferably includes: a positioning member in contact with the support member pivotally supporting the tension ring body; an urging device that urges the support member in the direction of separating the tension ring body from the auxiliary driving ring body via the positioning member; and a blocking mechanism that prevents the support member from moving close to the auxiliary driving ring body via the positioning member.

The electric bicycle preferably includes a rotation regulating part that prevents the support member from moving in the urging direction of the urging member. This configuration can prevent the support member from excessively moving in the urging direction of the urging member, avoiding damage caused by the support member coming into contact with the tension ring body.

The positioning mechanism may include the positioning member coming into contact with the support member pivotally supporting the tension ring body, and the support member may be held between the positioning member and the rotation regulating part so as to fix the position of the support member. This configuration is also applicable to the electric bicycle including an exterior transmission on the rear wheel, and the driving force transmitter can be disposed at a larger winding angle with respect to the auxiliary driving ring body.

The present invention is particularly applicable if the rear wheel includes a coaster brake. The positioning mechanism adjustably regulates the limit position of movement when the lower portion of the driving force transmitter is pulled forward by rotating a crank in a direction opposite to a forward- direction with the pedals.

Thus, the crank is rotated in the direction opposite to the forward direction with the pedals, allowing the positioning mechanism to prevent large slack on the upper portion of the driving force transmitter while satisfactorily operating the coaster brake and so on.

According to the present invention, forward and backward rotations of a crankshaft are transmitted to a front sprocket in the absence of a one-way clutch or a ratchet mechanism on a driving force transmission path between the crankshaft and the front sprocket.

The present invention preferably includes a human driving force detector for detecting a human driving force including a pedal force, the human driving force detector being capable of detecting a human driving force transmitted from the crankshaft to the transmission path in a contactless manner, and the crankshaft is rotatable in the direction opposite to the forward direction. In this case, the human power driving force detector is preferably a magnetostrictive torque sensor.

According to the positioning mechanism of the present invention, a turning force of the rear wheel may be transmitted to the driving force transmitter during traveling so as to adjustably regulate the limit position of movement when the lower portion of the driving force transmitter is pulled backward. This configuration is satisfactorily applicable if the turning force of the rear wheel is transmitted to the electric motor through the driving force transmitter during traveling so as to perform a regenerating operation by rotation.

With these configurations, the turning force of the rear wheel can be transmitted to the electric motor through the driving force transmitter during traveling so as to perform a regenerating operation by rotation, and the positioning mechanism can prevent large slack on the upper portion of the driving force transmitter.

### Advantageous Effects of Invention

According to the present invention, even if a large tension is generated on the lower portion of the driving force transmitter by rotating the pedals backward with the coaster brake assembled to the rear wheel of the electric bicycle, large slack is prevented on the upper portion of the driving force transmitter. Also in the case where the driving force transmitter is stretched by aged deterioration over an extended period of use of the electric bicycle, the positioning mechanism can adjust a limit position to a proper position. This can prevent failures, for example, the slacked driving force transmitter in contact with the body and so on, a tooth skip on the human power driving ring body, and disengagement of the driving force transmitter, thereby improving the reliability of the electric bicycle.

### Brief Description of Drawings

[FIG. 1] FIG. 1 is an overall side view of an electric bicycle according to a first embodiment of the present invention.
[FIG. 2] FIG. 2 is a partial cut side view of the electric bicycle.
[FIG. 3] FIG. 3 is a planar section illustrating a motor driving unit of the electric bicycle.
[FIG. 4] FIG. 4 is a side view showing a state of traveling when a coaster brake is not operated in the motor driving unit of the electric bicycle.
[FIG. 5] FIG. 5 is a perspective view showing a state of traveling when the coaster brake is not operated in the motor driving unit of the electric bicycle.
[FIG. 6] FIG. 6 is an exploded perspective view showing a tension device in the motor driving unit of the electric bicycle.
[FIG. 7] FIG. 7 is an exploded perspective view illustrating the hub of a rear wheel of the electric bicycle.
[FIG. 8] FIG. 8 is a longitudinal section illustrating the hub of the rear wheel of the electric bicycle with the rear wheel rotated by the pedal force of pedals.
[FIG. 9] FIG. 9 is a longitudinal section illustrating the hub of the rear wheel of the electric bicycle with the coaster brake operated by rotating the pedals backward or the pedals not rotated during traveling.
[FIG. 10] FIG. 10 is a side view showing a state of traveling when the coaster brake is operated in the motor driving unit of the electric bicycle.
[FIG. 11] FIG. 11 is a perspective view showing a state of traveling when the coaster brake is operated in the motor driving unit of the electric bicycle.
[FIG. 12] FIG. 12 is a side view illustrating a motor driving unit according to a modification of the electric bicycle.
[FIG. 13] FIG. 13 is a perspective view illustrating the motor driving unit according to the modification of the electric bicycle.
[FIG. 14] FIG. 14 is a side view illustrating a motor driving unit of an electric bicycle according to a second embodiment of the present invention.
[FIG. 15] FIG. 15 is an enlarged side view illustrating the principal part of the motor driving unit of the electric bicycle.
[FIG. 16] FIG. 16 is a side view illustrating a motor driving unit of an electric bicycle according to a third embodiment of the present invention.
[FIG. 17] FIG. 17 is an enlarged side view illustrating the principal part of the motor driving unit of the electric bicycle.
[FIG. 18] FIG. 18 is a side view of an electric bicycle according to a fourth embodiment of the present invention.
[FIG. 19] FIG. 19 is a planar section illustrating a motor driving unit of the electric bicycle.
[FIG. 20] FIG. 20 is a side view illustrating the motor driving unit of the electric bicycle.
[FIG. 21] FIG. 21 is a perspective view illustrating the motor driving unit of the electric bicycle.
[FIG. 22] FIG. 22 is a side view illustrating a motor driving unit of an electric bicycle according to another embodiment of the present invention.
[FIG. 23] FIG. 23 is an overall side view of a conventional electrical bicycle.
[FIG. 24] FIG. 24 is a partial cut side view of the conventional electrical bicycle.
[FIG. 25] FIG. 25 is a side view of a motor driving unit of the conventional electric bicycle.
[FIG. 26] FIG. 26 is an exploded perspective view of a tensioner device in the motor driving unit of the conventional electric bicycle.
[FIG. 27] FIG. 27 is a planar section illustrating the motor driving unit of the conventional electric bicycle.
[FIG. 28] FIG. 28 is an exploded perspective view of a tensioner device of another conventional electric bicycle.
[FIG. 29] FIG. 29 is an exploded perspective view of a tensioner device of still another conventional electric bicycle.
[FIG. 30] FIG. 30 is a side view for explaining an operation of the tensioner device of the conventional electric bicycle.

### Description of Embodiments

Electric bicycles according to embodiments of the present invention will be described below with reference to the accompanying drawings.

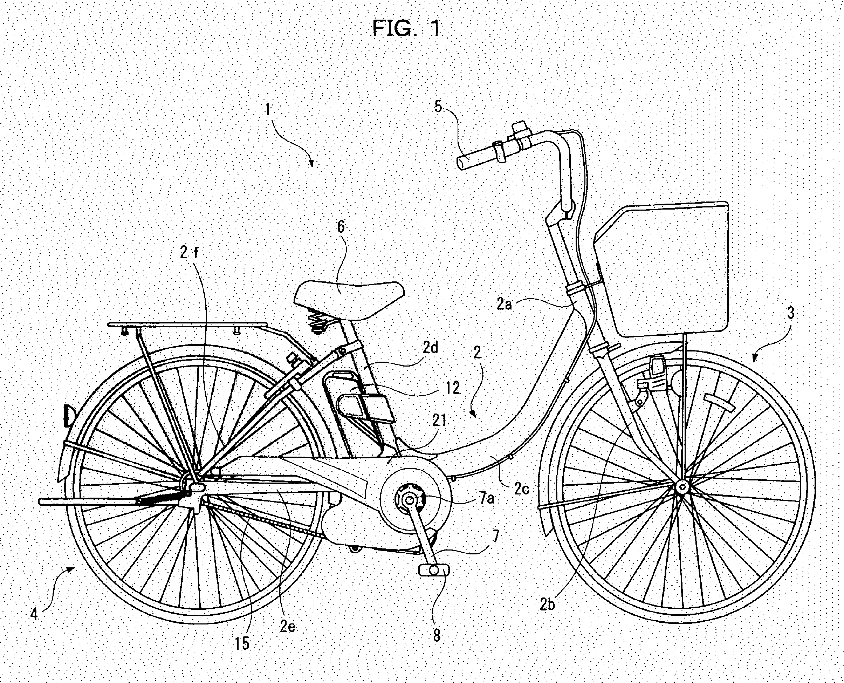

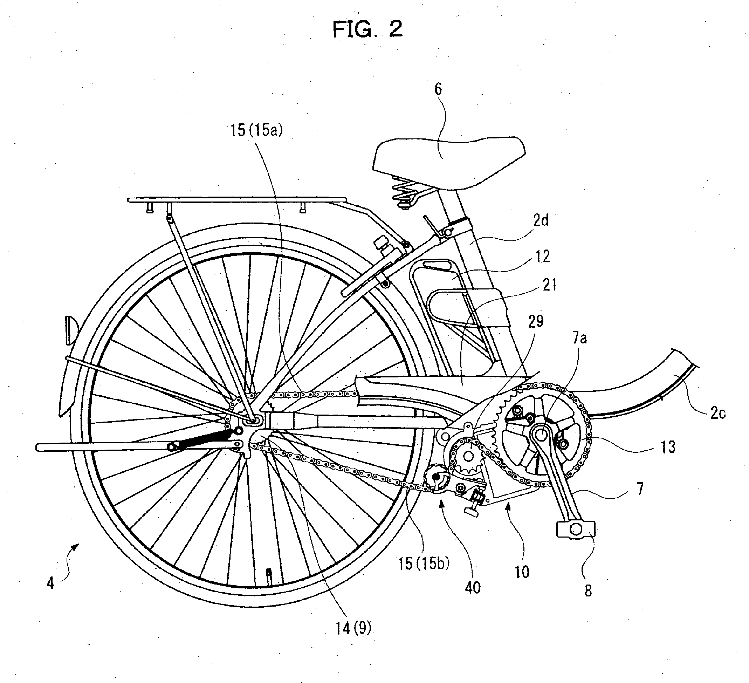

Reference numeral 1 in FIGS. 1 and 2 denotes the electric bicycle according to the embodiment of the present invention. As shown in FIGS. 1 and 2, the electric bicycle 1 includes: a metal frame 2 composed of a head pipe 2a, a front fork 2b, a main pipe 2c, a seat pipe 2d, a chain stay 2e, and a seat stay 2f; a front wheel 3 rotatably assembled to the lower end of the front fork 2b; a rear wheel 4 rotatably assembled to the rear end of the chain stay 2e; a handlebar 5 for steering the front wheel 3; a saddle 6; a crank 7; pedals 8; a motor driving unit 10 including an electric motor acting as a driving source for generating an auxiliary driving force (assisting force) and a control unit for various kinds of electrical control on, for example, the electric motor; a battery 12 including a secondary battery for supplying driving power to the electric motor; a manual operation part (not shown) that is attached to, for example, the handlebar 5 operable by a rider; a front sprocket (may be called a crank sprocket or a front gear) 13 that is attached so as to rotate with the crank 7 and acts as a human power driving ring body for outputting a human driving force including a pedal force; a rear sprocket (may be called a rear gear) 14 acting as a rear wheel attached to a hub (may be called a rear hub) 9 of the rear wheel 4; a chain 15 acting as a driving force transmitter rotatably wound around the front sprocket 13 and the rear sprocket 14 in an endless manner; and a chain cover 21 covering the chain 15 and so on from the side. The battery 12 is an example of a storage device. The battery 12 is preferably a secondary battery but may be a capacitor as another example.

As shown in FIGS. 1 and 2, the motor driving unit 10 is located substantially at the rear of a crankshaft 7a, for example, at an intermediate position between the front wheel 3 and the rear wheel 4 (specifically, under the intermediate position). This arrangement locates the motor driving unit 10 having a relatively large weight at the center of the electric bicycle 1 in the longitudinal direction. The front wheel 3 and the rear wheel 4 are easily lifted, achieving ease in handling the body (including the frame 2) of the electric bicycle 1, for example, riding over a step on a road. Furthermore, the electric bicycle 1 travels with high stability.

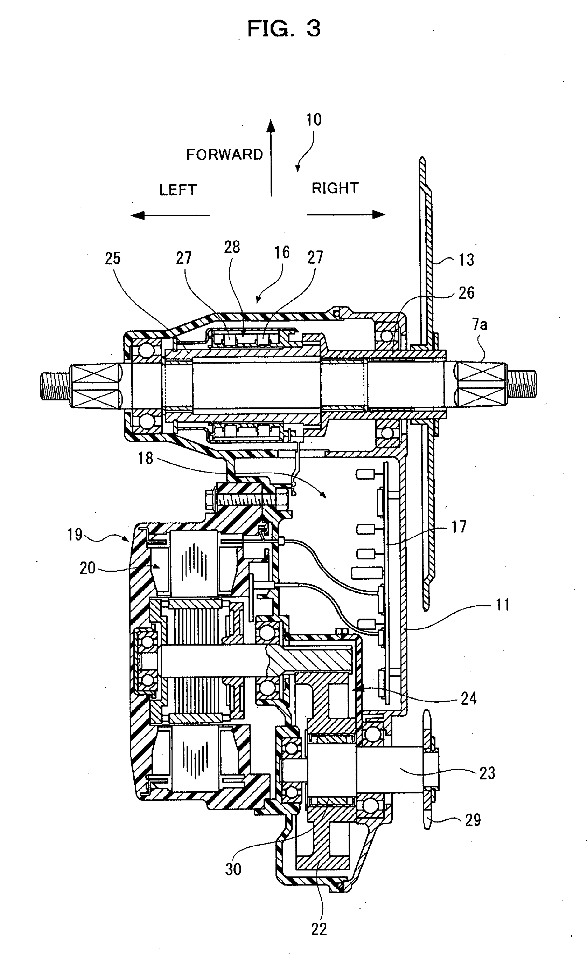

FIG. 3 is a plane section of the motor driving unit 10. As illustrated in FIG. 3, a lateral direction in the following explanation is set with respect to a traveling direction. The configuration of the invention is not limited to the direction.

As shown in FIG. 3, the motor driving unit 10 is divided into a crankshaft layout part 16 in which the interior of a unit case 11 forming an outer shell and a partition wall is disposed at the front and the crankshaft 7a is rotatably supported, a control area part that is located at the center in the longitudinal direction and contains a control unit 18 including kinds of electronic components, and a speed reduction mechanism part in which a motor unit 19 containing an electric motor 20 is disposed in a rearward position on the left side and a speed reduction mechanism 24 includes a reduction gear 22 and an auxiliary driving force output shaft 23 that are rotatably provided. In the crankshaft layout part 16, a first cylinder 25 is fit onto the left side of the crankshaft 7a via a spline portion so as to rotate with the crankshaft 7a. Moreover, a second cylinder 26 is fit onto the right side of the crankshaft. 7a so as to rotate about the crankshaft 7a. The right end of the first cylinder 25 and the left end of the second cylinder 26 are spline connected to each other to transmit the rotations of the first cylinder 25 to the second cylinder 26. Furthermore, the front sprocket 13 is attached to the right end of the second cylinder 26 so as to rotate with the second cylinder 26. These configurations transmit the rotations of the crankshaft 7a to the front sprocket 13 through the first cylinder 25 and the second cylinder 26, leading to a human driving force outputted from the front sprocket 13 according to a pedal force. In other words, in the present embodiment, the conventional one-way clutch mechanism 122 (FIG. 24) is not provided on a driving force transmission path between the crankshaft 7a and the front sprocket 13, directly transmitting the forward and backward rotations of the crankshaft 7a to the front sprocket 13.

A magnetostrictive portion for generating magnetic strain according to a stress is formed on the outer surface of the first cylinder 25. A coil 27 is disposed with a small clearance from the outer surface of the first cylinder 25. The magnetostrictive portion and the coil 27 and so on constitute a magnetostrictive torque sensor 28 acting as a human driving force detector. The magnetostrictive torque sensor 28 detects a torque according to a pedal force (human driving force) in a contactless manner. The magnetostrictive torque sensor 28 can also detect a reverse torque. The electric motor 20 can be immediately stopped when a reverse torque is detected. This can reduce a burden on the feet of a rider.

An auxiliary drive sprocket 29 is disposed at the rear of the front sprocket 13 of the motor driving unit 10 so as to be attached to the auxiliary driving force output shaft 23 protruding from the motor driving unit 10. The auxiliary drive sprocket 29 acts as an auxiliary driving ring body for outputting an auxiliary driving force generated in the electric motor 20. The auxiliary drive sprocket 29 is engaged with the chain 15 at the rear of the front sprocket 13 so as to lift the lower portion of the chain 15, adding an auxiliary driving force to a human driving force. The driving force is transmitted to the rear wheel 4. In the present embodiment, an auxiliary driving force transmission path between the electric motor 20 and the auxiliary drive sprocket 29 in the motor driving unit 10 includes a one-way clutch mechanism 30 between the reduction gear 22 and the auxiliary driving force output shaft 23. Thus, if the pedals 8 are pressed while the electric motor 20 is not rotated, the load of the electric motor 20 is prevented from acting on the pedals 8, precluding an excessive pedal force on the pedals 8.

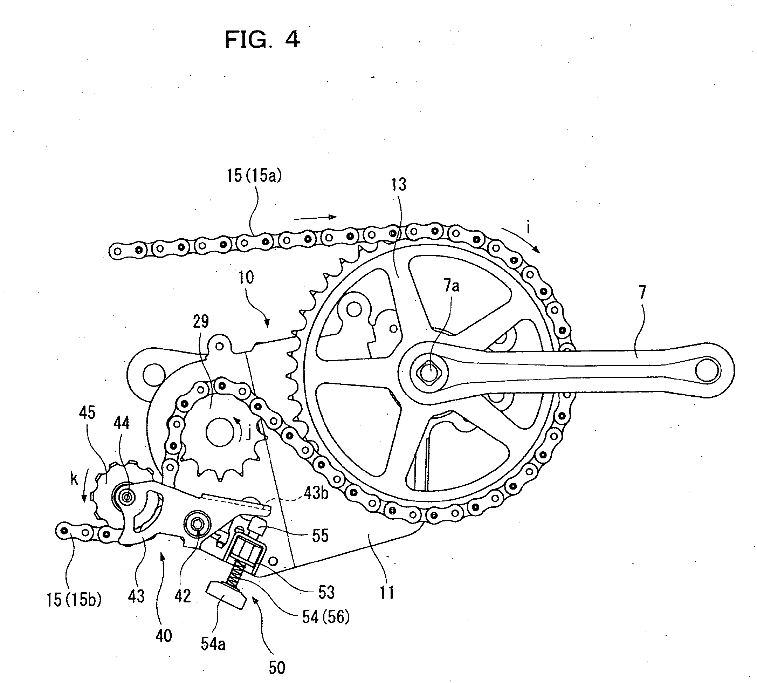

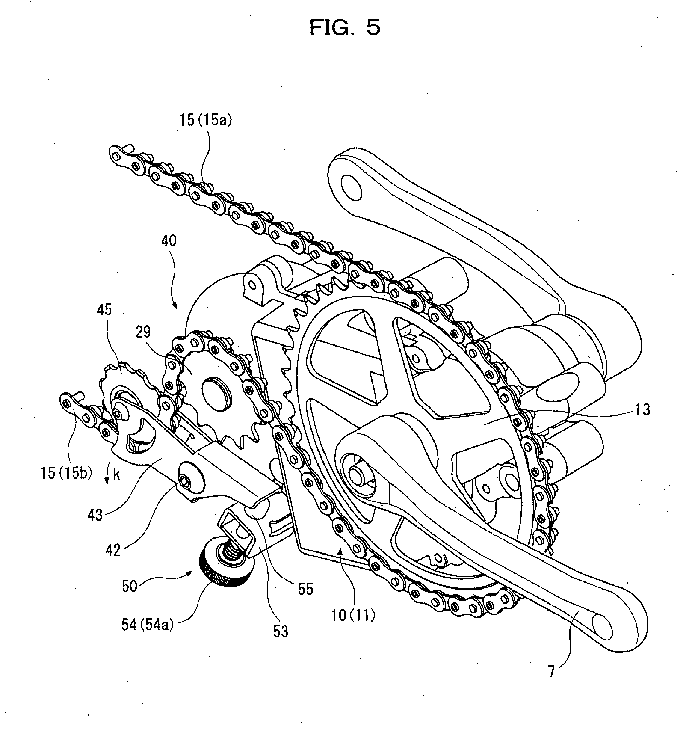

As shown in FIGS. 2 and 4 to 6, a tensioner device 40 is disposed at the rear of the auxiliary drive sprocket 29 of the motor driving unit 10. The tensioner device 40 is engaged with a lower portion 15b of the chain 15 substantially from above so as to press the chain 15 substantially downward. The tensioner device 40 includes: a boss 41 laterally protruding from the unit case 11 forming the outer shell of the motor driving unit 10; a support arm 43 acting as a support member pivotally attached to the protruding end of the boss 41 via a mounting screw 42; a tension sprocket 45 that is rotatably attached to the rear end of the support arm 43 via a support shaft 44 and acts as a tension wheel engaged with the lower portion 15b of the chain 15; an urging spring 46 that urges the support arm 43 in direction k shown in FIGS. 4 and 5; and a positioning mechanism 50 that adjustably regulates a limit position (moving range) of movement of the tension sprocket 45 when a tension for moving the tension sprocket 45 in a direction opposite to the direction k is applied to the chain 15, that is, when a larger tension is applied to the lower portion 15b than to an upper portion 15a of the chain 15. The tension sprocket 45 is urged in the direction k by the urging force of the urging spring 46, that is, in a direction along which the tension sprocket 45 is separated from the auxiliary drive sprocket 29 in a state in which the tension sprocket 45 is pivotal (rotatable) with respect to the mounting portion of the mounting screw 42 via the support arm 43. The urging spring 46 has a proper urging force that can satisfactorily remove slack on the lower portion 15b of the chain 15. As will be discussed later, the urging force of the urging spring 46 is smaller than a tensile force applied to the lower portion 15b of the chain 15 when the pedals 8 are reversely rotated.

The tension sprocket 45 provided on the tensioner device 40 guides the chain 15 so as to increase a winding angle for the engagement of the chain 15 with the auxiliary drive sprocket 29 to a proper angle. The tension sprocket 45 further absorbs slack in the chain 15 to keep a proper tension of the chain 15. This structure engages the chain 15 with the auxiliary drive sprocket 29 at a large winding angle and prevents a tooth skip caused by slack in the chain 15, thereby satisfactorily transmitting the auxiliary driving force of the electric motor 20 to the chain 15.

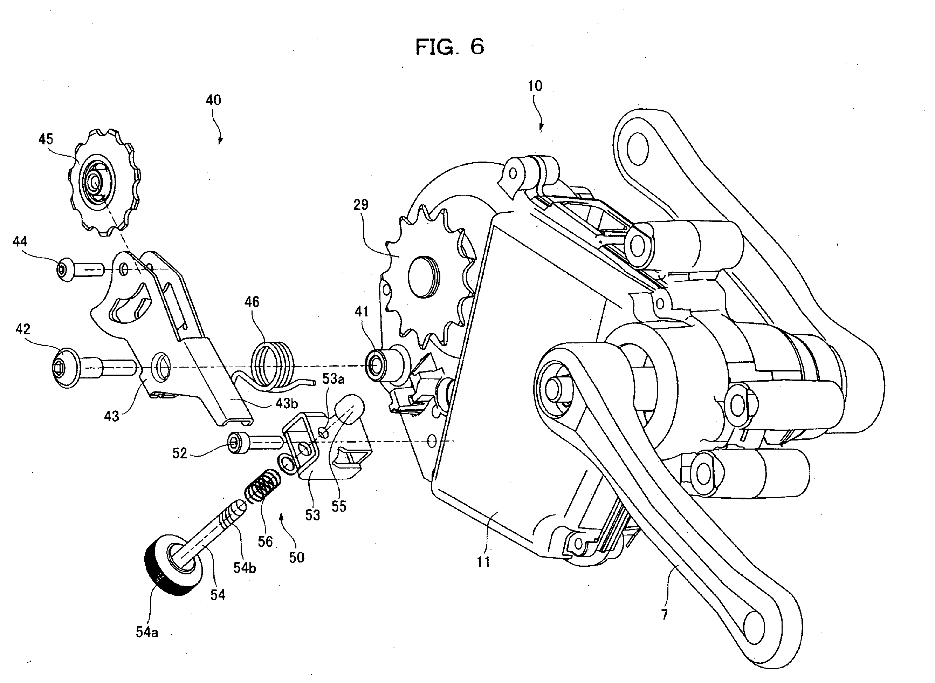

As shown in FIG. 6 and so on, the positioning mechanism 50 includes: a support frame 53 fixed to the unit case 11 with a mounting screw 52; a positioning screw 54 acting as a positioning member that is attached so as to penetrate the support frame 53 diagonally from below with the front end contactable from below with a front end 43b extending in front of the mounting screw 42 of the support arm 43; and an urging spring 56 that urges the end (upper end) of the positioning screw 54 substantially below to prevent the positioning screw 54 from protruding beyond the support frame 53. In the present embodiment, the end of the positioning screw 54 is covered with an elastic cap 55. The cap 55 brings the end of the positioning screw 54 in indirect contact with the back side of the front end 43b of the support arm 43, accepting small vibrations of the support arm 43. However, the cap 55 is not always necessary. The cap 55 may be omitted to cause the positioning screw 54 to directly come into contact with the back side of the front end 43b of the support arm 43. A knob 54a having a large diameter is formed on the lower end of the positioning screw 54. An external thread 54b is formed on the end of the positioning screw 54 and is screwed into a screw hole 53a formed on the support frame 53. The knob 54a is manually operated so as to adjust the protrusion size of the end of the positioning screw 54 diagonally upward from the support frame 53. This can adjust a lower limit position (moving range) of the front end of the support arm 43, that is, an upper limit position (moving range) of the tension sprocket 45 attached to the rear end of the support arm 43.

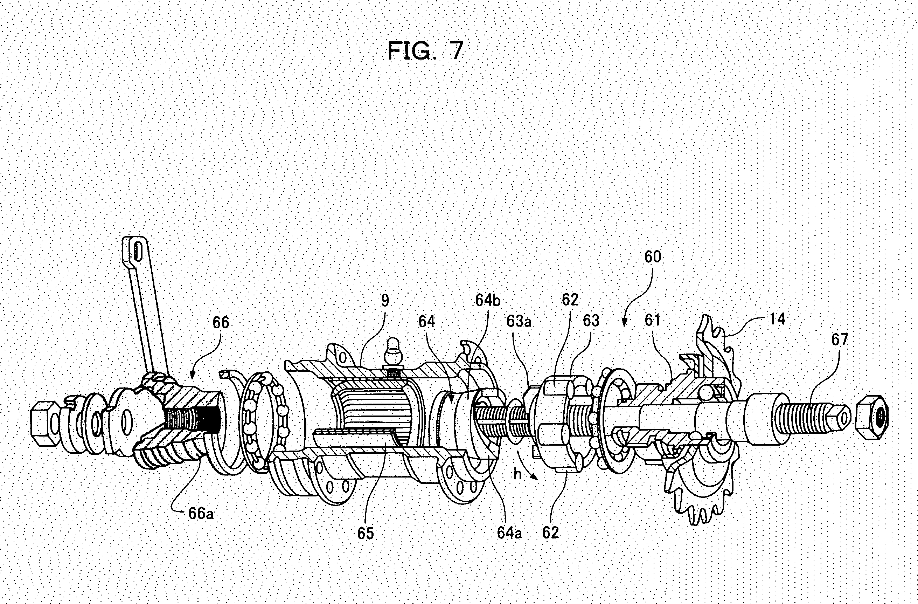

The electric bicycle 1 does not include, as a braking device of the rear wheel 4, a rim brake that presses a brake shoe to the rim of the front wheel, the brake shoe being operated by an operation on a brake lever, or a band brake or a roller brake on the rear wheel. Instead of these braking devices, a coaster brake 60 in FIG. 7 is provided. The coaster brake 60 applies a brake to the rear wheel 4 by rotating the pedals 8 in the direction opposite to the forward rotation direction with respect to the rear hub 9 (see FIG. 2, actually located behind the rear sprocket 14 as shown in FIG. 2). The braking device of the front wheel 3 may be a caliper brake or a rim brake that is operated by an operation on the brake lever, or the braking device of the front wheel 3 may not be provided (the front wheel 3 is not provided with a braking device in FIG. 1).

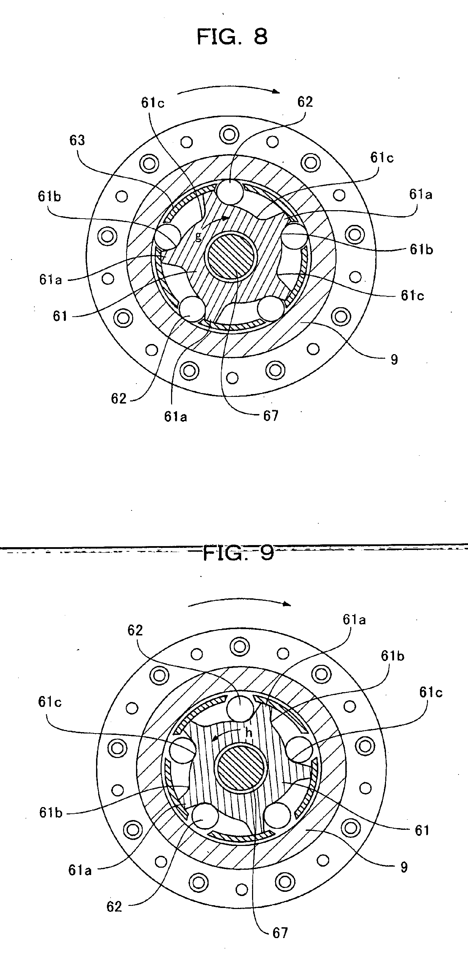

FIG. 7 is an exploded perspective view of the hub (rear hub) 9 of the rear wheel 4 provided with the coaster brake 60. FIGS. 8 and 9 are cross-sectional views of the rear hub. In the present embodiment, the coaster brake 60 is "roller clutch driven type" of coaster hub mechanism B type for bicycle use, conforming to JIS (Japanese Industrial Standard) D9419. The coaster brake 60 is provided in a hub body that forms the outer case of the rear hub 9 and rotates with the rear wheel 4. As shown in FIGS. 7 to 9, a driver 61 is rotatably fit onto a hub shaft 67 of the rear wheel 4, and the rear sprocket 14 is fixed around one end of the driver 61 (the right end in FIG. 7) so as to rotate with the coaster brake 60. The coaster brake 60 includes: the driver 61 including protrusions 61a, large-diameter cam surfaces 61b, and small-diameter cam surfaces 61c that are circumferentially spaced at proper intervals on another end side of the driver 61 (the left side in FIG. 7) as shown in FIGS. 8 and 9; a cam base 63 that includes rollers 62 circumferentially disposed at proper intervals around the outer end of the cam base 63 and cam portions 63a protruding in an axial direction (to the left in FIG. 7); an expander 64 that includes a tilted cam portion 64a engaged with the cam portions 63a of the cam base 63 and has a tapered surface 64b; a brake shoe 65 that can radially enlarge and shrink and come into slidable contact with the inner surface of the rear hub 9; and a brake cone 66 having a tapered surface 66a capable of moving the brake shoe 65 to the outside.

When the pedals 8 are rotated in a normal traveling direction (the rotation direction of forward traveling, also called a forward direction), the driver 61 is rotated in direction g in FIG. 8 via the chain 15 and the rear sprocket 14 and so on. Accordingly, the rollers 62 are pressed to the outside by the large-diameter cam surfaces 61b of the driver 61. This holds the rollers 62 between the driver 61 and the hub body of the rear hub 9 with a high pressure. Thus, the hub body is integrated with the driver 61 to rotate the overall rear wheel 4. At this point, the cam portions 63a of the cam base 63 are in contact with a thin portion of the tilted cam portion '64a of the expander 64 with respect to the axial direction while the expander 64 is located on the right side in FIG. 7. Thus, the tapered surface 64b of the expander 64 does not come into contact with the brake shoe 65, and the brake shoe 65 is separated from the inner surface of the rear hub 9 without diameter expansion.

In the case where the pedals 8 are rotated in a direction opposite to the rotation direction of forward traveling so as to rotate the rear sprocket 14 backward through the chain 15, the driver 61 is rotated in direction h like the rear sprocket 14 as shown in FIG. 9. Thus, the rollers 62 in contact with the small-diameter cam surfaces 61c of the driver 61 have a clearance from the inner surface of the hub body. However, when a rotation of the driver 61 in the direction h rotates the cam base 63 in the direction h via the rollers 62, the expander 64 in contact with the cam portions 63a of the cam base 63 via the tilted cam portion 64a is moved to the left in FIG. 7. Thus, the brake shoe 65 is pressed laterally by the tapered surface 64b of the expander 64 and the tapered surface 66a of the brake cone 66 to have a larger diameter, so as to be strongly pressed to the inner surface of the hub body of the rear hub 9. This applies a brake to the rear wheel 4 through the rear hub 9.

If the pedals 8 are stopped during riding so as to stop rotating the rear sprocket 14 through the chain 15, a turning force for rotating the driver 61 in the direction g in FIG. 8 is eliminated. As shown in FIG. 9, the rollers 62 are placed near the small-diameter cam surfaces 61c of the driver 61 with a clearance from the inner surface of the rear hub 9. The driver 61 is not rotated, neither is the cam base 63. Thus, the expander 64 is kept on the right in FIG. 7, the tapered surface 64b of the expander 64 does not come into contact with the brake shoe 65, and the brake shoe 65 is separated from the inner surface of the rear hub 9 without diameter expansion. Consequently, even if the rear hub 9 is rotated, the turning force of the rear hub 9 is not transmitted to the driver 61 and the rear sprocket 14, leading to freewheeling kept in a coasting condition like in the case where a free wheel (a one-way clutch mechanism or a ratchet mechanism) is disposed between the driver 61 and the rear sprocket 14.

In the present embodiment, the coaster brake 60 is "roller clutch drive type". The coaster brake 60 is not particularly limited. A coaster brake of "taper cone drive type" or "multi-disc type" may be used instead. In the present embodiment, the rear wheel 4 does not include an exterior transmission.

With this configuration, the pedal 8 located forward of the crankshaft 7a is pressed downward from above, rotating the front sprocket 13 in direction i (see FIG. 4). Thus, the chain 15 is moved downward by the front sprocket 13 while a tension is applied forward to the upper portion 15a by the front sprocket 13. After that, the chain 15 is engaged with the auxiliary drive sprocket 29 while being diagonally lifted toward the rear and is then guided down toward the rear by the tension sprocket 45, so that the chain 15 is moved rearward to the lower part of the rear sprocket 14. The auxiliary drive sprocket 29 is rotated in direction j according to a pedal force applied to the pedal 8 so as to add an auxiliary driving force. Hence, when the pedal 8 is pressed, a tension is applied only to the upper portion 15a of the chain 15 but is hardly applied to the lower portion 15b of the chain 15. In this state, slack on the lower portion 15b of the chain 15 is absorbed by the tensioner device 40. In other words, the tension sprocket 45 is pivoted in the direction k by the urging force of the urging spring 46 so as to absorb slack on the lower portion 15b of the chain 15.

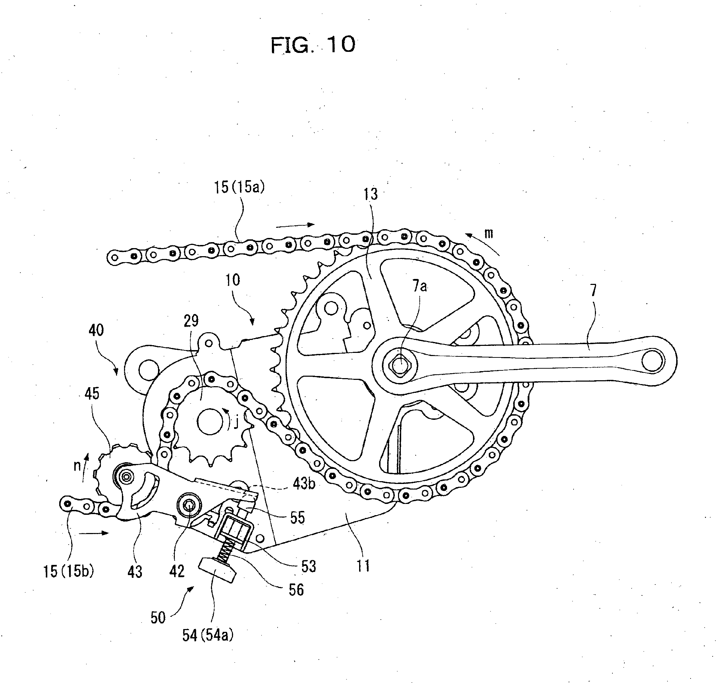

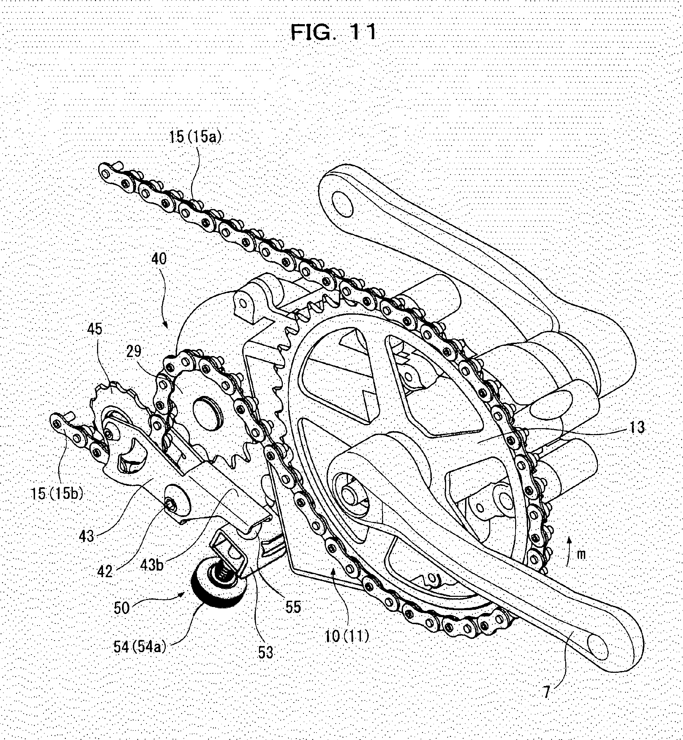

If the pedal 8 is rotated backward during traveling, as has been discussed, the coaster brake 60 is operated to apply a brake. At this point, as shown in FIGS. 10 and 11, the backward rotation of the pedals 8 rotates the front sprocket 13 in direction m. This causes a large tension pulling the lower portion 15b of the chain 15 to the front, linearly extending the lower portion 15b of the chain 15 between the position of the upper end of the auxiliary drive sprocket 29 and the lower end of the rear sprocket 14. In this case, if the conventional tensioner device 111 is used, as shown in FIG. 27, a tension applied to the lower portion 110b of the chain 110 is larger than the urging force of the urging spring 117. Thus, the tension sprocket 112 considerably moves upward (direction e) and causes large slack on the upper portion 110a of the chain 110. This may lead to failures, for example, the slacked upper portion 110a of the chain 110 in contact with the body, a tooth skip of the front sprocket 108, or disengagement of the chain 110.

Also in the embodiment of the present invention, if a large tension is generated on the lower portion 15b of the chain 15 by reversely rotating the pedals 8, the lower portion 15b of the chain 15 is linearly extended between the position of the upper end of the auxiliary drive sprocket 29 and the lower end of the rear sprocket 14, lifting the tension sprocket 45. In the embodiment of the present invention, as shown in FIGS. 10 and 11, the positioning mechanism 50 brings the front end 43b of the support arm 43 into contact with the end of the positioning screw 54 (in the present embodiment, the cap 55 attached to the end of the positioning screw 54) even if the tension sprocket 45 is moved (pivoted) upward (direction n). This prevents the tension sprocket 45 from largely moving in the direction n, precluding large slack on the upper portion 15a of the chain 15 so as to prevent failures, for example, the slacked chain 15 in contact with the chain stay 2e or the chain cover 21. Also when the coaster brake 60 is released to switch the crank 7 and the front sprocket 13 from a backward rotation to a forward rotation, the chain 15 is hardly displaced. Thus, the front sprocket 13 does not have a tooth skip or the chain 15 does not come off the front sprocket 13.

Furthermore, the positioning mechanism 50 can adjust the limit position (moving range) of movement when a larger tension is applied to the lower portion 15b than to the upper portion 15a of the chain 15. Hence, even if the chain 15 is stretched by aged deterioration over an extended period of use of the electric bicycle 1, the positioning mechanism 50 can properly adjust the limit position (moving range). This can prevent failures, for example, the slacked chain 15 in contact with the chain stay 2e and so on, a tooth skip on the front sprocket 13, and disengagement of the chain 15, thereby improving the reliability of the electric bicycle 1.

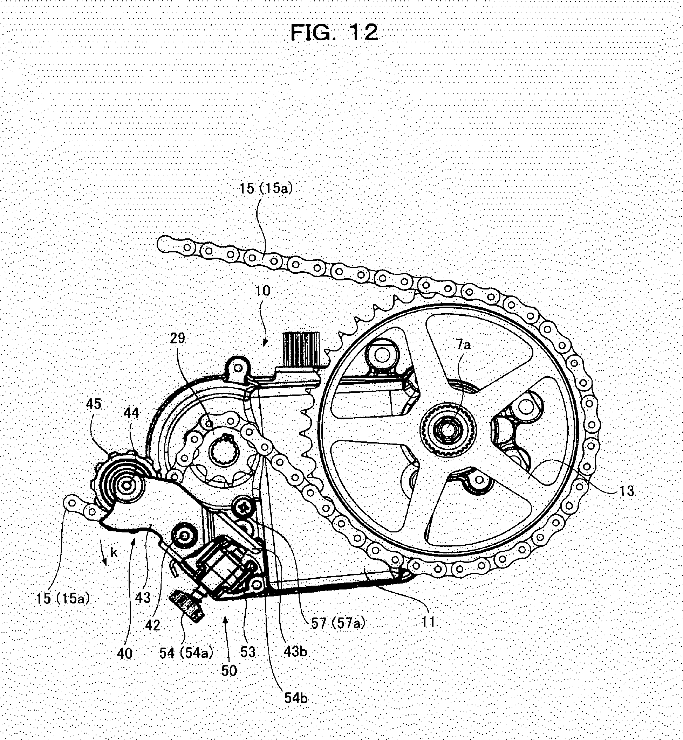

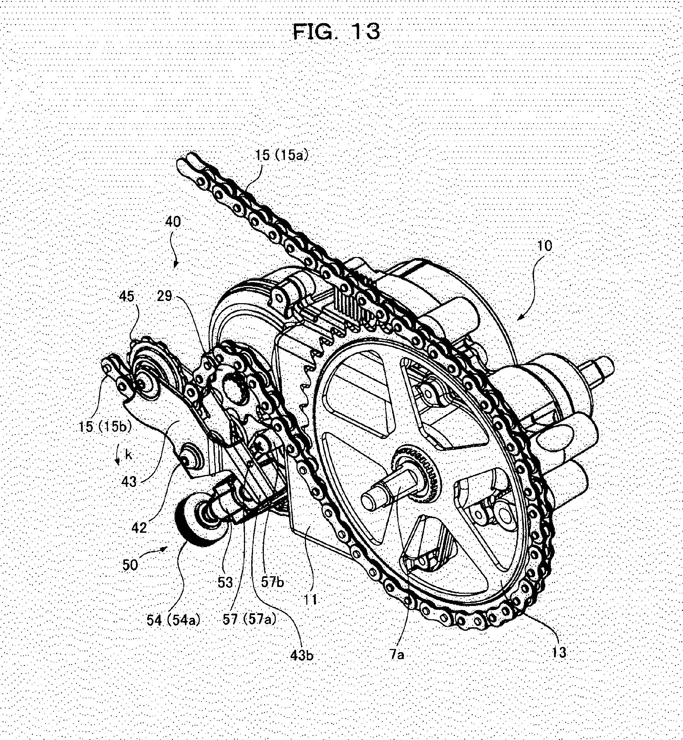

The positioning mechanism 50 may include a rotation regulating part 57 in addition to this configuration. As shown in FIGS. 12 and 13, the rotation regulating part 57 prevents the support arm 43 or the tension sprocket 45 from excessively rotating (moving) in the urging direction (direction k) of the urging spring 56.

In the case where the chain 15 is optionally removed in an inspection or a repair of the electric bicycle 1 or if the chain 15 comes off, the rotation regulating part 57 can prevent the support arm 43 or the tension sprocket 45 from rotating in the direction k by the urging force of the urging spring 56 so as to bring the front end 43b of the support arm 43 into contact with the auxiliary drive sprocket 29 or the chain 15 near the auxiliary drive sprocket 29. This can prevent the front end 43b of the support arm 43 from coming into contact with the auxiliary drive sprocket 29 or the chain 15 near the auxiliary drive sprocket 29 so as to cause damage to the support arm 43, the auxiliary drive sprocket 29, or the chain 15, thereby improving the reliability.

The rotation regulating part 57 of the present embodiment includes a boss-like support protrusion 57b that is integrated with the unit case 11 of the motor driving unit 10, and a rotation regulating screw 57a screwed into the support protrusion 57b. If the support arm 43 excessively rotates in the urging direction of the urging spring 56 (the front end 43b of the support arm 43 excessively rotates upward), the support arm 43 comes into contact with the top of the rotation regulating screw 57a to prevent excessive movement of the support arm 43 or the tension sprocket 45. If the rotation regulating screw 57a is not attached, the support arm 43 is too high to come into contact with the support protrusion 57b of the rotation regulating part 57. In the assembly process of the electric bicycle 1, when the support arm 43 and the urging spring 46 are assembled to the boss 41 or the like, the support arm 43 and the urging spring 46 are assembled in the absence of the rotation regulating screw 57a and thus are efficiently assembled with ease. After that, the chain 15 is engaged with the tension sprocket 45 and the tension sprocket 45, and then the front end 43b of the support arm 43 is pressed downward against the urging force of the urging spring 56. In this state, the rotation regulating screw 57a is attached so as to satisfactorily regulate excessive movement of the support arm 43 or the tension sprocket 45 in the urging direction of the urging spring 56. In the present embodiment, the rotation regulating part 57 includes the boss-like support protrusion 57b integrated with the unit case 11 and the rotation regulating screw 57a screwed into the support protrusion 57b. The present embodiment is not limited to this configuration. For example, the support protrusion may be a cylinder separated from the unit case 11.

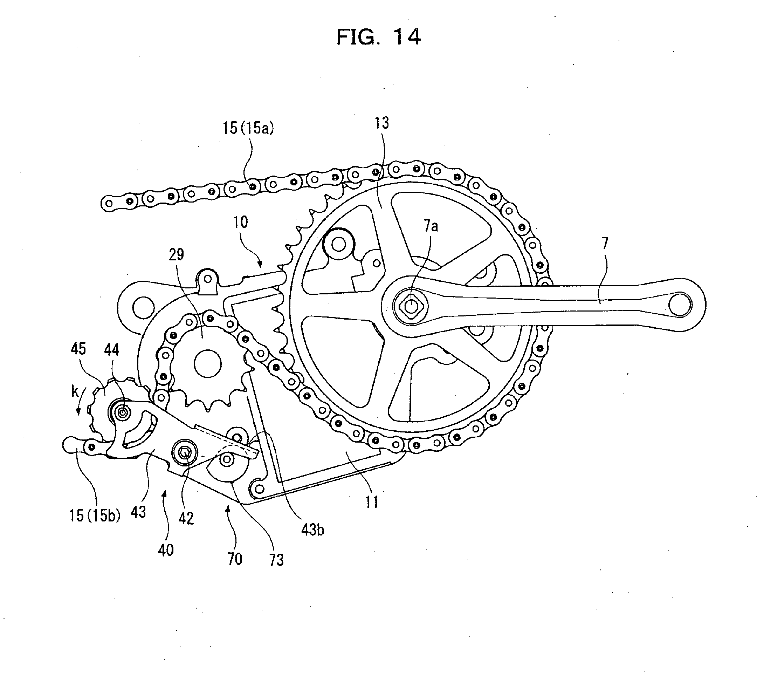

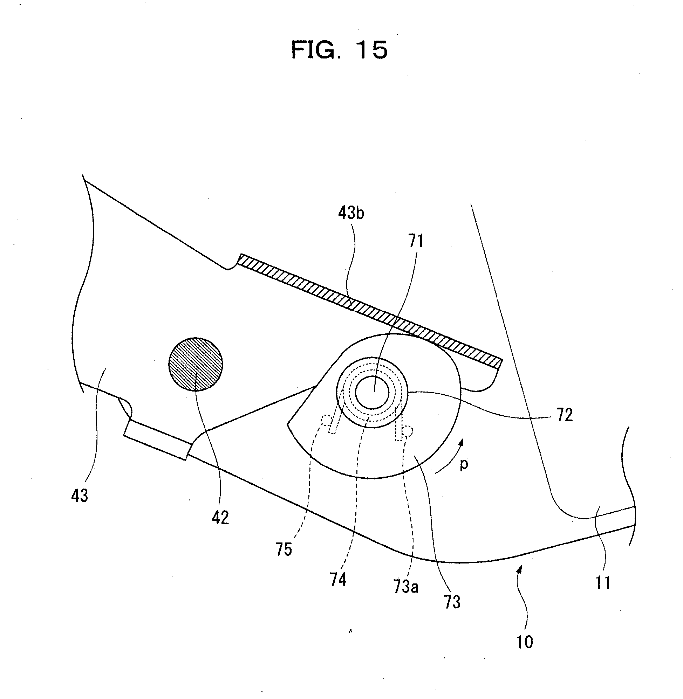

Referring to FIGS. 14 and 15, a second embodiment of the present invention will be described below. An electric bicycle according to the second embodiment is different from the electric bicycle 1 of the first embodiment only in a positioning mechanism 70 of a tensioner device. Since the other configurations of the second embodiment are identical to those of the first embodiment, only the positioning mechanism 70 of the tensioner device and matters relating to the positioning mechanism 70 will be described below. An explanation of the other configurations is omitted. Constituent elements having the same functions are indicated by the same reference numerals.

In the first embodiment, the position of the positioning screw 54 of the positioning mechanism 50 needs to be manually adjusted. This may disadvantageously require a long period of time and improperly adjust the position of the positioning screw 54. This problem can be solved by the positioning mechanism 70 of the tensioner device in the electric bicycle according to the second embodiment of the present invention.

Referring to FIGS. 14 and 15, the second embodiment of the present invention will be described below. In the present embodiment, the positioning mechanism 70 includes: a protruding shaft 71 that laterally protrudes from a unit case 11; a one-way clutch mechanism 72 (may be replaced with a ratchet mechanism) having an interior that is fixed to the protruding shaft 71 and an outer cylindrical part that is rotatable only in direction p but is non-rotatable in a direction opposite to the direction p; a cam 73 acting as a positioning member whose radius gradually increases in a circumferential direction opposite to the direction p; and an urging spring 74 where the cam 73 is rotatably urged in the direction p. In FIG. 15, reference numeral 75 denotes a protrusion that laterally protrudes from the unit case 11 and is in contact with one end of the urging spring 74, reference numeral 73a denotes a protrusion that protrudes from the cam 73 to the unit case 11 and is in contact with another end of the urging spring 74, and reference numeral 43b denotes the front end of a support arm 43 in contact with the cam 73.

In this configuration, the cam 73 is urged to rotate in the direction p by the urging spring 74. Thus, if slack occurs on a lower portion 15b of a chain 15 when a pedal 8 in front of a crankshaft 7a is pressed downward or the chain 15 is stretched by aged deterioration or the like, the slack is absorbed by a tensioner device 40 and the cam 73 rotates in the direction p. Thus, the position of a tension sprocket 45 is automatically adjusted.

Hence, the positioned tension sprocket 45 is located at the adjusted position, bringing the front end 43b of the support arm 43 into contact with the cam 73 so as to prevent the tension sprocket 45 from largely moving in a direction opposite to direction k even if the pedals 8 are rotated backward to operate a coaster brake 60 during traveling. This can prevent large slack on an upper portion 15a of the chain 15 so as to prevent failures, for example, the slacked chain 15 in contact with a chain stay 2e or a chain cover 21. Also when the coaster brake 60 is released to switch a crank 7 and a front sprocket 13 from a backward rotation to a forward rotation, the chain 15 is hardly displaced. Thus, the front sprocket 13 does not have a tooth skip or the chain 15 does not come off the front sprocket 13.

Moreover, the positioning mechanism 70 automatically adjusts the chain 15 so as to substantially eliminate slack. Hence, even if the chain 15 is stretched by aged deterioration over an extended period of use of the electric bicycle 1, the chain 15 is automatically adjusted to a proper position. This can prevent failures, for example, the slacked chain 15 in contact with the chain stay 2e and so on or can prevent a tooth skip on the front sprocket 13 and disengagement of the chain 15, thereby improving the reliability of the electric bicycle 1. Since the urging force of the urging spring 74 for urging the cam 73 also urges the support arm 43 and the tension sprocket 45, an urging spring 46 for urging the support arm 43 may be omitted.

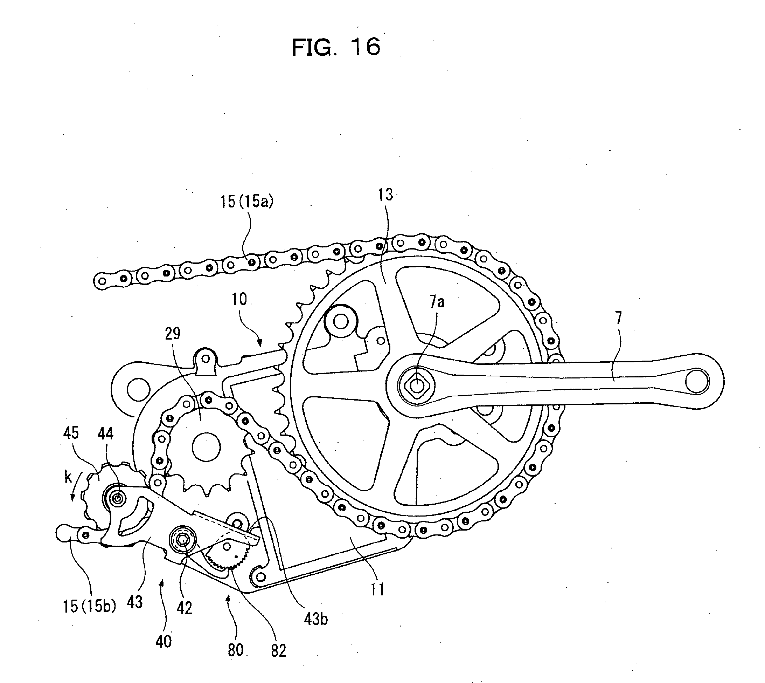

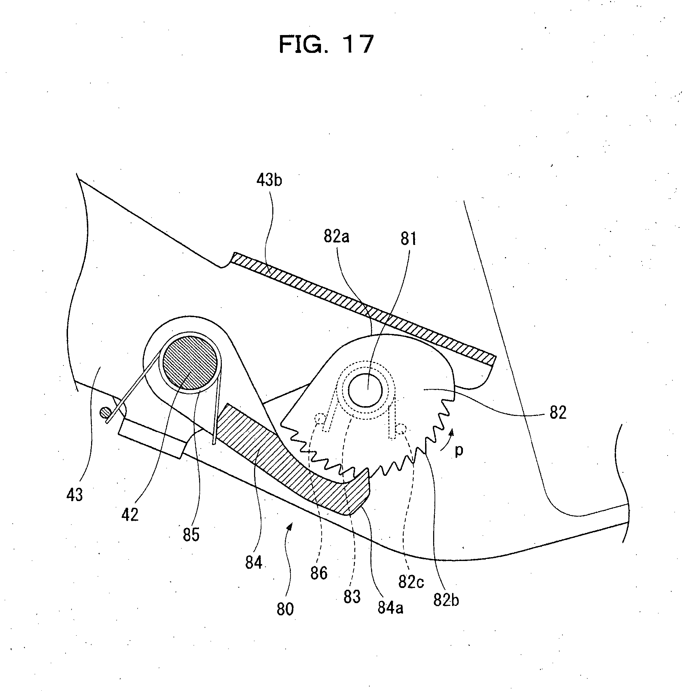

The positioning mechanism 70 of the electric bicycle according to the second embodiment of the present invention may be replaced with, as shown in FIGS. 16 and 17, a positioning mechanism 80 of an electric bicycle according to a third embodiment of the present invention.

As shown in FIGS. 16 and 17, in the present embodiment, the positioning mechanism 80 includes: a protruding shaft 81 laterally protruding from a unit case 11; a cam body 82 acting as a positioning member rotatably attached to the protruding shaft 81, the cam body 82 having a cam portion 82a whose radius gradually increases in a clockwise direction, that is, in a circumferential direction opposite to direction p and tooth portions 82b having an equal radius in the circumferential direction; an urging spring 83 that urges the cam body 82 rotatably in the direction p; a claw body 84 that is pivotally supported by, for example, a boss 41 laterally protruding from the unit case 11 and has one end engaged with the tooth portion 82b of the cam body 82; and an urging spring 85 that urges the one end of the claw body 84 in the engagement direction of the tooth portion 82b of the cam body 82. In FIG. 17, reference numeral 86 denotes a protrusion that laterally protrudes from the unit case 11 and is in contact with one end of an urging spring 74, reference numeral 82c denotes a protrusion that protrudes from the cam 82 to the unit case 11 and is in contact with another end of the urging spring 85, and reference numeral 43b denotes the front end of a support arm 43 in contact with a cam 73.

Also in this configuration, the cam body 82 is urged to rotate in the direction p by the urging spring 83. Thus, a pedal 8 in front of a crankshaft 7a is pressed downward or a chain 15 is stretched by, for example, aged deterioration so as to cause a certain amount of slack (an amount of slack that allows the one end of the claw body 84 to climb over one of the tooth portions 82b) on a lower portion 15b of the chain 15. At this point, the slack is absorbed by a tensioner device 40 and the cam body 82 rotates in the direction p. Thus, a tension sprocket 45 pivots in direction k so as to automatically adjust the position of the tension sprocket 45 step by step.

This locates the tension sprocket 45 at the adjusted position. Thus, even if the pedals 8 are rotated backward to operate a coaster brake 60 during traveling, the front end 43b on the support arm 43 does not come into contact with the cam body 82 so as to largely move the tension sprocket 45 in a direction opposite to the direction k. This can prevent large slack on an upper portion 15a of the chain 15 so as to prevent failures, for example, the slacked chain 15 in contact with a chain stay 2e or a chain cover 21. Also when the coaster brake 60 is released to switch a crank 7 and a front sprocket 13 from a backward rotation to a forward rotation, the chain 15 is hardly displaced. Thus, the front sprocket 13 does not have a tooth skip or the chain 15 does not come off the front sprocket 13. This improves the reliability of the electric bicycle. Since the urging force of the urging spring 83 for urging the cam body 82 urges the support arm 43 and the tension sprocket 45, an urging spring 46 for urging the support arm 43 may be omitted.

In the first to third embodiments, the coaster brake 60 is provided and the positioning mechanisms 50, 70, and 80 adjustably regulate a limit position (moving range) that is moved when the lower portion 15b of the chain 15 is pulled forward by pressing the pedals 8 backward. The present invention is not limited to this configuration.

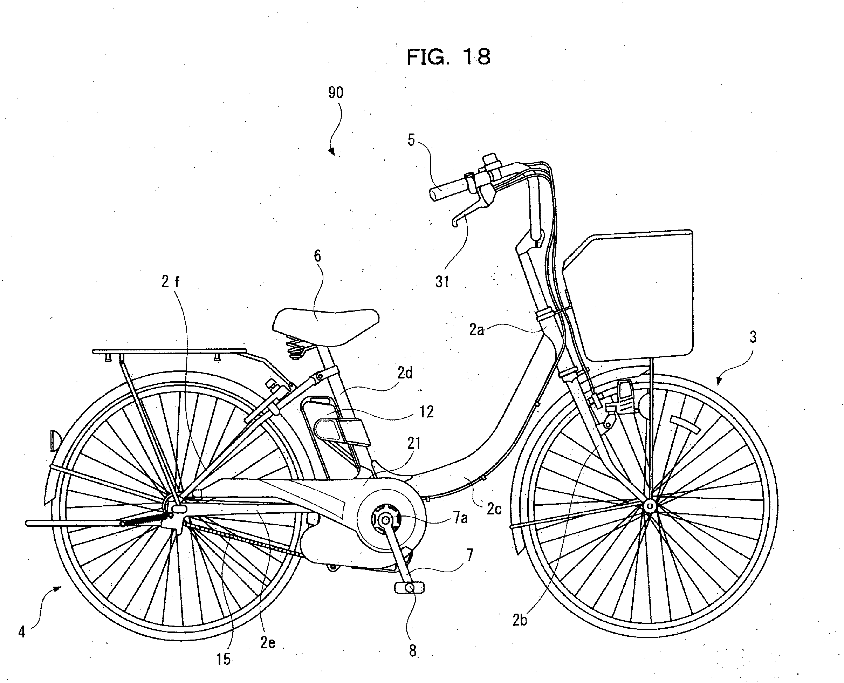

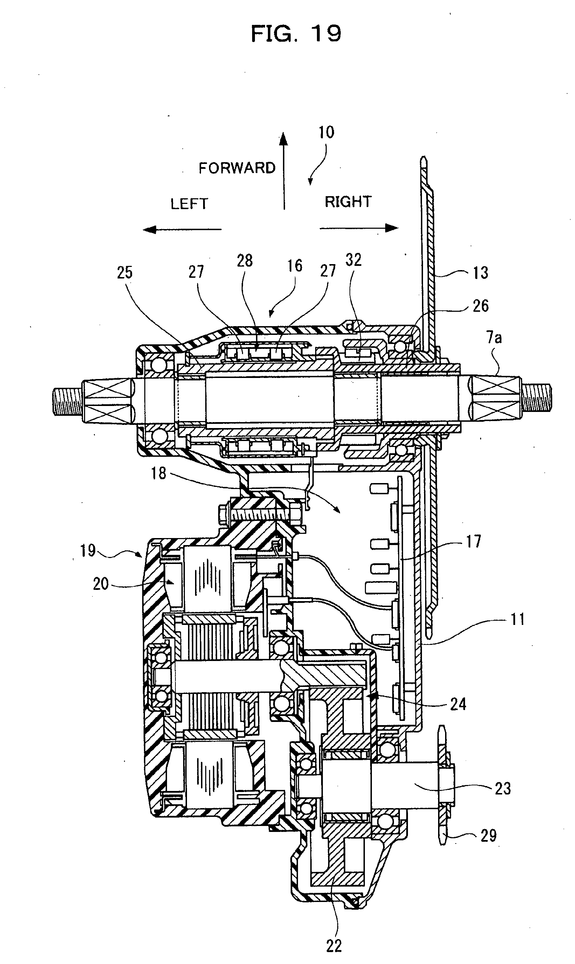

FIGS. 18 to 21 show an electric bicycle 90 according to a fourth embodiment of the present invention. As shown in FIG. 18, as in the foregoing embodiments, the electric bicycle 90 includes a motor driving unit 10 disposed at an intermediate position between a front wheel 3 and a rear wheel 4 (specifically, in a lower part at the intermediate position), for example, substantially at the rear of a crankshaft 7a. However, the electric bicycle 90 does not include a coaster brake 60 but includes a rim brake, a band brake, or a roller brake that applies a brake to the rear wheel 4 by operating a brake lever 31 attached to a handlebar 5. Since the force of a backward rotation of a pedal 8 or a crank 7 does not need to be transmitted to the rear wheel 4, a one-way clutch mechanism 32 is provided on a driving force transmission path between the crankshaft 7a and a front sprocket 13 to transmit a forward rotation of the crankshaft 7a to the front sprocket 13 without transmitting a backward rotation of the crankshaft 7a to the front sprocket 13. Thus, even when the auxiliary driving force of an electric motor 20 is transmitted to a chain 15 while pressing on the pedals 8 is stopped during traveling, the pedals 8 and the crank 7 can be kept non-rotatable.

In the electric bicycle 90 of the present embodiment, the rotations of the rear wheel 4 are transmitted to the electric motor 20 of the motor driving unit 10 via the chain 15 during coasting. This can rotate the electric motor 20 while performing a regenerating operation for charging a battery 12 at an operation on the brake lever 31. Thus, when pressing on the pedals 8 is stopped during coasting, the rotations of the rear wheel 4 are transmitted to a rear sprocket 14, the rotations of the rear sprocket 14 are transmitted to the chain 15, and then the rotations of an auxiliary drive sprocket 29 rotated by the chain 15 in direction j are transmitted to the electric motor 20 so as to rotate the electric motor 20. A brake detecting switch (not shown) for detecting an operation of the brake lever 31 is disposed near the brake lever 31. When the brake detecting switch detects an operation of the brake lever 31, a regenerating operation is performed to charge the battery 12. Hence, a travel distance can be increased with the number of times of charging the battery 12.

Also in the electric bicycle 90 according to the present embodiment, a tensioner device 40 is provided with a positioning mechanism 50 (see FIGS. 4 to 6) configured as in the first embodiment. The positioning mechanism 50 can adjust a lower limit position (range) of the front end of a support arm 43, that is, an upper limit position (moving range) of a tension sprocket 45 attached to the rear end of the support arm 43.

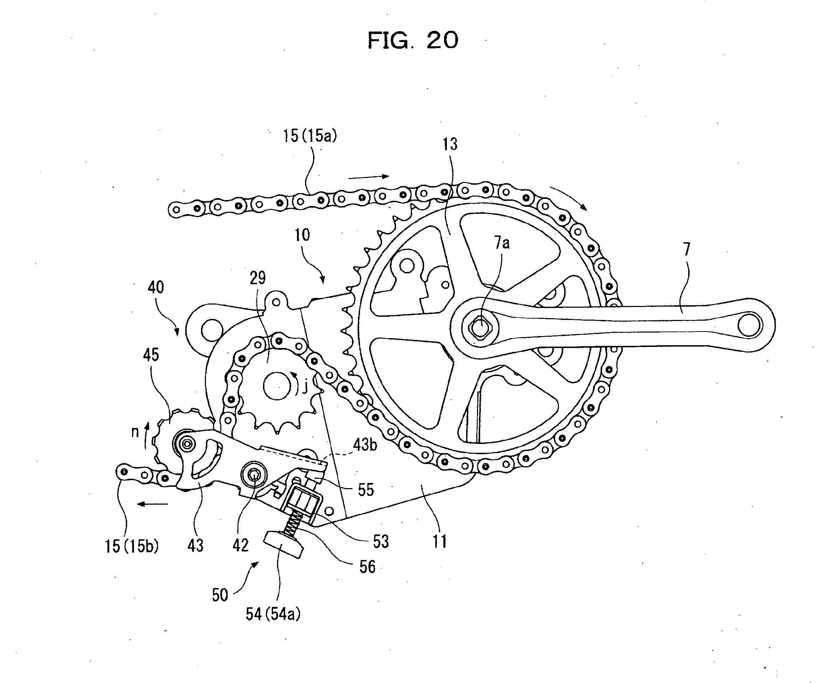

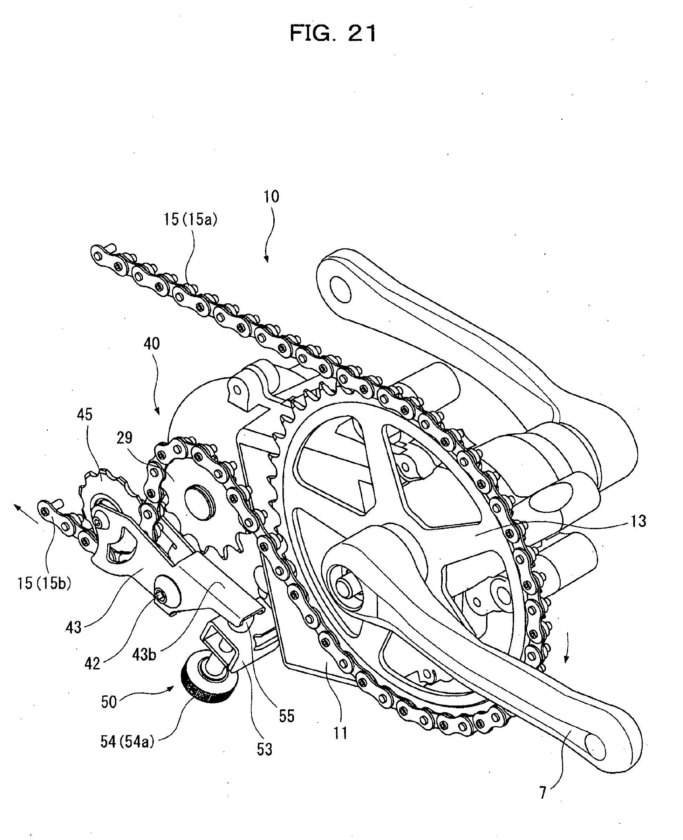

In this configuration, when the rotations of the rear wheel 4 are transmitted to the chain 15 during coasting, the rear sprocket 14 pulls a lower portion 15b of the chain 15 backward, causing a large tension. The lower portion 15b of the chain 15 is linearly extended between the position of the upper end of the auxiliary drive sprocket 29 and the lower end of the rear sprocket 14. In the present embodiment, however, as shown in FIGS. 20 and 21, the positioning mechanism 50 brings the front end of the support arm 43 into contact with the end of a positioning screw 54 (in the present embodiment, a cap 55 ) attached to the end of the positioning screw 54) even if the tension sprocket 45 is lifted in direction n, thereby preventing the tension sprocket 45 from being largely moved in the direction n. This prevents large slack on an upper portion 15a of the chain 15 so as to prevent failures, for example, the slacked chain 15 in contact with a chain stay 2e or a chain cover 21. In this state, the pedals 8 are pressed to switch a tension to the chain 15 from the lower portion 15b to the upper portion 15a. At this point, the chain 15 is hardly displaced and thus ) the front sprocket 13 does not have a tooth skip or the chain 15 does not come off the front sprocket 13.

Hence, even if the chain 15 is stretched by aged deterioration over an extended period of use of the electric bicycle 1, the positioning mechanism 50 can substantially eliminate slack in the chain 15 by a manual adjustment. Even if the chain 15 is stretched by aged deterioration over an extended period of use of the electric bicycle 1, the chain 15 can be adjusted to a ) proper position. This can prevent failures, for example, the slacked chain 15 in contact with the chain stay 2e and so on, a tooth skip on the front sprocket 13, and disengagement of the chain 15, thereby improving the reliability of the electric bicycle 1.

In the fourth embodiment, the positioning mechanism 50 has the same structure as that of the first embodiment. The fourth embodiment is not limited to this structure. The positioning mechanism 50 may be identical to the positioning mechanism 70 of the second embodiment or the positioning mechanism 80 of the third embodiment. Thus, the chain 15 can be automatically adjusted so as to eliminate slack.

In the first embodiment, the positioning mechanism 50 has a positioning function. The first embodiment is not limited to this configuration. For example, the positioning mechanism 50 may have a position regulating screw for regulating the position of the support arm 43 and internal threads for attaching the position regulating screw. The internal threads are circumferentially formed at multiple points around the mounting screw 42 on the unit case 11. The upper limit position (moving range) of the support arm 43 or the tension sprocket 45 may be adjusted by changing the mounting position of the position regulating screw.

The positioning mechanisms 50, 70, and 80 of the second to fourth embodiments may further include the rotation regulating part 57 that prevents the support arm 43 and the tension sprocket 45 from excessively rotating in the urging direction (direction k) of the urging spring 56 as shown in FIGS. 12 and 13.

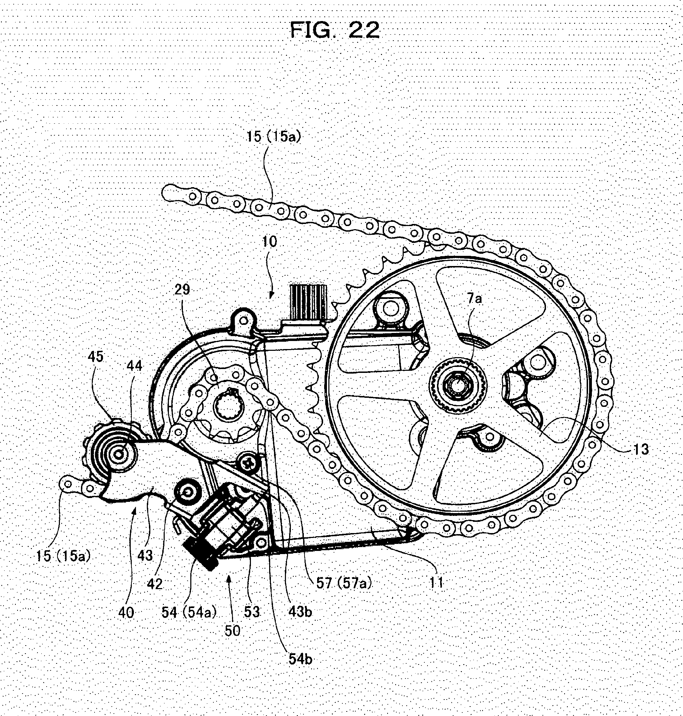

In a modification shown in FIGS. 12 and 13, the rotation regulating part 57 prevents the support arm 43 and the tension sprocket 45 from excessively rotating in the urging direction (direction k) of the urging spring 56. The modification is not limited to this configuration. Specifically, as shown in FIG. 22, the rotation regulating part 57 can prevent the support arm 43 from rotating (moving) in the urging direction of the urging spring 56. The external thread 54b of the positioning screw 54 is most protruded as a positioning member in contact with the support arm 43, and then the support arm 43 is held between the external thread 54b of the positioning screw 54 and the rotation regulating part 57 to fix the position of the support arm 43. This configuration may be advantageously applicable to an electric bicycle having an external transmission on the rear wheel. In this case, the chain 15 is advantageously wound around the auxiliary drive sprocket 29 with a larger winding angle.

In the forgoing embodiments, the auxiliary drive sprocket 29 and the tension sprocket 45 are engaged with the lower portion 15b of the chain 15. The present invention is not limited to this configuration. Also in the case where the auxiliary drive sprocket 29 and the tension sprocket 45 are engaged with the upper portion 15a of the chain 15, a vertically reversed similar configuration.can obtain the same effect. Specifically, the positioning mechanisms 50, 70, and 80 are disposed such that the limit position of movement of the tension sprocket 45 is regulated in an adjustable manner when a larger tension is applied to a part where the auxiliary drive sprocket 29 and the tension sprocket 45 are engaged with each other on the chain 15 than the other part.

In the foregoing embodiments, the chain 15 is a driving force transmitter for transmitting a pedal force from the pedals 8 to the rear wheel 4. The present invention is not limited to this configuration and thus the chain may be replaced with a toothed belt. In the use of the toothed belt (driving force transmitting toothed belt), the auxiliary drive sprocket 29 may be replaced with an auxiliary driving gear acting as an auxiliary driving ring body for outputting an auxiliary driving force. The rear sprocket 14 may be replaced with a rear gear acting as a rear ring body.

### Industrial Applicability

The present invention is applicable to an electric bicycle that transmits an auxiliary driving force from an auxiliary driving ring body such as an auxiliary drive sprocket to a driving force transmitter such as a chain, and may apply a tension to the lower portion of the driving force transmitter.

## Claims

1. An electric bicycle (1) comprising:
a human power driving ring body (13) that rotates with a crank (7) and outputs a human driving force including a pedal force;
a driving force transmitter (15) rotatably wound around the human power driving ring body (13) and the rear ring body (14) in an endless manner;
an electric motor (20) acting as a driving source for generating an auxiliary driving force;
an auxiliary driving ring body (29) that receives the auxiliary driving force generated in the electric motor (20) and transmits the auxiliary driving force to the driving force transmitter (15) while being engaged with the driving force transmitter; and
a tensioner device (40) that increases a winding angle of the driving force transmitter (15) with respect to the auxiliary driving ring body (29) and applies a tension to the driving force transmitter so as to absorb slack on a lower portion of the driving force transmitter, and which has
a tension ring body (45) engaged with the driving force transmitter (15);
a support member (43) pivotally supporting the tension ring body (45);
an urging member (56) that applies an urging force to the tension ring body (45) so as to move the tension ring body in a direction of increasing the tension of the driving force transmitter (15) **characterized by** a rear ring body (14) and a coaster brake (60) provided on a rear wheel (4), and further **characterized in that** the tensioner device comprises:
a positioning mechanism that adjustably regulates a limit position of movement of the tension ring body (45) at multiple positions including an intermediate position in a pivoting range of the support member (43), when the coaster brake (60) is started by rotating pedals in a direction opposite to a forward rotation direction, allowing the driving force transmitter (15) to receive a tension for moving the tension ring body (45) in a direction opposite to an urging direction of the urging force.

2. The electric bicycle according to claim 1, **characterized in that** the auxiliary driving ring body (29) and the tension ring body (45) are engaged with a part of the driving force transmitter on the same side, and the positioning mechanism adjustably regulates a limit position of movement of the tension ring body when a larger tension is applied to the engaged part of the driving force transmitter with the auxiliary driving ring body and the tension ring body than the other part of the driving force transmitter.

3. The electric bicycle according to one of claims 1 and 2, **characterized by** further comprising a motor driving unit (10) disposed at an intermediate position between a front wheel (3) and the rear wheel (4), the motor driving unit being provided with the electric motor and the auxiliary driving ring body.

4. The electric bicycle according to any one of claims 1 to 3, **characterized in that** the tensioner device is attached to the motor driving unit provided with the electric motor and the auxiliary driving ring body.

5. The electric bicycle according to claim 4, **characterized in that** the positioning mechanism has a positioning member in contact with the support member pivotally supporting the tension ring body, the positioning member being attached so as to adjust a relative position to the motor driving unit at multiple positions.

6. The electric bicycle according to claim 1, **characterized in that** when the driving force transmitter has large slack, the positioning mechanism switches a regulated position among the multiple positions and changes a movable position of the tension ring body so as to reduce the slack.

7. The electric bicycle according to claim 6, **characterized in that** the positioning mechanism comprises:
a positioning member in contact with the support member pivotally supporting the tension ring body;
an urging device that urges the support member in a direction of separating the tension ring body from the auxiliary driving ring body via the positioning member; and
a blocking mechanism that prevents the support member from moving in a direction of moving the tension ring body close to the auxiliary driving ring body via the positioning member.

8. The electric bicycle according to any one of claims 1 to 7, **characterized in that** the positioning mechanism adjustably regulates a limit position of movement when the lower portion of the driving force transmitter is pulled forward by rotating a crank in a direction opposite to a forward direction with pedals.

9. The electric bicycle according to claim 1, **characterized in that** the positioning mechanism adjustably regulates the limit position at the multiple positions while continuously preventing the tension ring body and the support member from moving in the direction opposite to the urging direction of the urging force.

10. The electric bicycle according to claim 1, **characterized in that** the positioning mechanism adjustably regulates the limit position at the multiple positions while continuously preventing the tension ring body and the support member from moving in the direction opposite to the urging direction of the urging force.

11. The electric bicycle according to claim 1, **characterized in that** the urging member has an urging force smaller than the tension generated to pull the driving force transmitter when the pedals are rotated backward.

12. The electric bicycle according to claim 1, **characterized in that** forward and backward rotations of a crankshaft are transmitted to a front sprocket in the absence of a one-way clutch or a ratchet mechanism on a driving force transmission path between the crankshaft and the front sprocket.

13. The electric bicycle according to any one of claims 1 to 12, **characterized by** further comprising a human driving force detector for detecting a human driving force including a pedal force, the human driving force detector being capable of detecting a human driving force transmitted from the crankshaft to the transmission path in a contactless manner, the crankshaft being rotatable in the direction opposite to the forward direction.

14. The electric bicycle according to claim 13, **characterized in that** the human driving force detector is a magnetostrictive torque sensor.

15. The electric bicycle according to any one of claims 1 to 8, **characterized in that** the positioning mechanism adjustably regulates a limit position of movement when the lower portion of the driving force transmitter is pulled backward by a turning force of the rear wheel transmitted to the driving force transmitter during traveling.

16. The electric bicycle according to any one of claims 1 to 8 and 15, **characterized in that** the turning force of the rear wheel is transmitted to the electric motor through the driving force transmitter during traveling so as to perform a regenerating operation by rotation.

## Patentansprüche

1. Elektrofahrrad (1), das umfasst:
einen Kranzkörper (13) für Muskelkraft-Antrieb, der sich mit einer Kurbel (7) dreht und eine Muskelantriebskraft einschließlich einer Pedalkraft ausgibt;
eine Antriebskraft-Übertragungseinrichtung (15), die endlos drehbar um den Kranzkörper (13) für Muskelkraft-Antrieb und den hinteren Kranzkörper (14) gewickelt ist;
einen Elektromotor (20), der als Antriebsquelle zum Erzeugen einer Hilfs-Antriebskraft dient;
einen Kranzkörper (29) für Hilfs-Antrieb, der die in dem Elektromotor (20) erzeugte Hilfs-Antriebskraft empfängt und die Hilfs-Antriebskraft auf die Antriebskraft-Übertragungseinrichtung (15) überträgt und dabei mit der Antriebskraft-Übertragungseinrichtung (15) in Eingriff ist; und
eine Spannvorrichtung (40), die einen Wickelwinkel der Antriebskraft-Übertragungseinrichtung (15) in Bezug auf den Kranzkörper (29) für Hilfs-Antrieb vergrößert und eine Spannung auf die Antriebskraft-Übertragungseinrichtung ausübt, um Durchhang an einem unteren Abschnitt der Antriebskraft-Übertragungseinrichtung auszugleichen, und die aufweist:
einen Spann-Kranzkörper (45), der mit der Antriebskraft-Übertragungseinrichtung (15) in Eingriff ist;
ein Trageelement (43), das den Spann-Kranzkörper (45) schwenkbar trägt; und
ein Drückelement (56), das eine Drückkraft auf den Spann-Kranzkörper ausübt, um den Spann-Kranzkörper in einer Richtung zum Erhöhen der Spannung der Antriebskraft-Übertragungseinrichtung (15) zu bewegen, **gekennzeichnet durch** einen hinteren Kranzkörper (14) und eine Rücktrittbremse (60), die sich an einem Hinterrad (4) befinden und des Weiteren **dadurch** gekennzeichnet, dass die Spannvorrichtung umfasst:
einen Positioniermechanismus, der eine Grenzposition von Bewegung des Spann-Kranzkörpers (45) einstellbar an mehreren Positionen reguliert, die eine Zwischenposition in einem Schwenkbereich des Trageelementes (43) einschließen, wenn die Rücktrittbremse (60) **durch** Drehen von Pedalen in einer Richtung entgegengesetzt zu einer VorwärtsDrehrichtung betätigt wird, so dass die Antriebskraft-Übertragungseinrichtung (15) eine Spannung zum Bewegen des Spann-Kranzkörpers (45) in einer Richtung entgegengesetzt zu einer Drückrichtung der Drückkraft aufnehmen kann.

2. Elektrofahrrad nach Anspruch 1, **dadurch gekennzeichnet, dass** der Kranzkörper (29) für Hilfs-Antrieb und der Spann-Kranzkörper (45) an der gleichen Seite mit einem Teil der Antriebskraft-Übertragungseinrichtung in Eingriff sind und der Positioniermechanismus eine Grenzposition von Bewegung des Spann-Kranzkörpers verstellbar reguliert, wenn eine stärkere Spannung auf den mit dem Kranzkörper (29) für Hilfs-Antrieb und dem Spann-Kranzkörper in Eingriff befindlichen Teil der Antriebskraft-Übertragungseinrichtung als auf den anderen Teil der Antriebskraft-Übertragungseinrichtung ausgeübt wird.

3. Elektrofahrrad nach einem der Ansprüche 1 und 2, **dadurch gekennzeichnet, dass** es des Weiteren eine Motor-Antriebseinheit (10) umfasst, die an einer Zwischenposition zwischen einem Vorderrad (3) und dem Hinterrad (4) angeordnet ist, wobei die Motor-Antriebseinheit mit dem Elektromotor und dem Kranzkörper für Hilfs-Antrieb versehen ist.

4. Elektrofahrrad nach einem der Ansprüche 1 bis 3, **dadurch gekennzeichnet, dass** die Spannvorrichtung an der Motor-Antriebseinheit angebracht ist, die mit dem Elektromotor und dem Kranzkörper für Hilfs-Antrieb versehen ist.

5. Elektrofahrrad nach Anspruch 4, **dadurch gekennzeichnet, dass** der Positioniermechanismus ein Positionierelement aufweist, das in Kontakt mit dem Trageelement ist, das den Spann-Kranzkörper schwenkbar trägt, wobei das Positionierelement so angebracht ist, dass es eine Position relativ zu der Motor-Antriebseinheit an mehreren Positionen einstellt.

6. Elektrofahrrad nach Anspruch 1, **dadurch gekennzeichnet, dass**, wenn die Antriebskraft-Übertragungseinrichtung starken Durchhang aufweist, der Positioniermechanismus eine regulierte Position von den mehreren Positionen umstellt und eine bewegliche Position des Spann-Kranzkörpers ändert, um den Durchhang zu verringern.

7. Elektrofahrrad nach Anspruch 5, **dadurch gekennzeichnet, dass** der Positioniermechanismus umfasst:
ein Positionierelement, das in Kontakt mit dem Trageelement ist, das den Spann-Kranzkörper schwenkbar trägt;
eine Drückvorrichtung, die das Trageelement in einer Richtung drückt, in der der Spann-Kranzkörper über das Positionierelement von dem Kranzkörper für Hilfs-Antrieb getrennt wird; und
einen Blockiermechanismus, der verhindert, dass sich das Trageelement in einer Richtung bewegt, in der sich der Spann-Kranzkörper über das Positionierelement nahe an den Kranzkörper für Hilfs-Antrieb bewegt.

8. Elektrofahrrad nach einem der Ansprüche 1 bis 7, **dadurch gekennzeichnet, dass** der Positioniermechanismus eine Grenzposition von Bewegung einstellbar reguliert, wenn der untere Abschnitt der Antriebskraft-Übertragungseinrichtung durch Drehen einer Kurbel mit Pedalen in einer Richtung entgegengesetzt zu einer Vorwärtsrichtung gezogen wird.

9. Elektrofahrrad nach Anspruch 1, **dadurch gekennzeichnet, dass** der Positioniermechanismus die Grenzposition an den mehreren Positionen einstellbar reguliert und dabei kontinuierlich verhindert, dass sich der Spann-Kranzkörper und das Trageelement in der Richtung entgegengesetzt zu der Drückrichtung der Drückkraft bewegen.

10. Elektrofahrrad nach Anspruch 1, **dadurch gekennzeichnet, dass** der Positioniermechanismus die Grenzposition an den mehreren Positionen einstellbar reguliert und dabei kontinuierlich verhindert, dass sich der Spann-Kranzkörper und das Trageelement in der Richtung entgegengesetzt zu der Drückrichtung der Drückkraft bewegen.

11. Elektrofahrrad nach Anspruch 1, **dadurch gekennzeichnet, dass** das Drückelement eine Drückkraft hat, die schwächer ist als die Spannung, die erzeugt wird, um die Antriebskraft-Übertragungseinrichtung zu ziehen, wenn die Pedale rückwärts gedreht werden.

12. Elektrofahrrad nach Anspruch 1, **dadurch gekennzeichnet, dass** Vorwärts- und Rückwärtsdrehungen einer Kurbelwelle beim Nichtvorhandensein einer Freilaufkupplung oder eines Sperrklinkenmechanismus auf einem Antriebskraft-Übertragungsweg zwischen der Kurbelwelle und einem vorderen Zahnkranz auf den vorderen Zahnkranz übertragen wird.

13. Elektrofahrrad nach einem der Ansprüche 1 bis 12, **dadurch gekennzeichnet, dass** es des Weiteren einen Detektor für Muskelantriebskraft umfasst, mit dem eine Muskelantriebskraft einschließlich einer Pedalkraft erfasst wird, wobei der Detektor für Muskelantriebskraft in der Lage ist, eine von der Kurbelwelle auf den Übertragungsweg übertragene Muskelantriebskraft kontaktlos zu erfassen, und die Kurbelwelle in der Richtung entgegengesetzt zu der Vorwärtsrichtung gedreht werden kann.

14. Elektrofahrrad nach Anspruch 13, **dadurch gekennzeichnet, dass** der Detektor für Muskelantriebskraft ein magnetostriktiver Drehmomentsensor ist.

15. Elektrofahrrad nach einem der Ansprüche 1 bis 8, **dadurch gekennzeichnet, dass** der Positioniermechanismus eine Grenzposition von Bewegung einstellbar reguliert, wenn der untere Abschnitt der Antriebskraft-Übertragungseinrichtung durch eine Drehkraft des Hinterrades, die beim Fahren auf die Antriebskraft-Übertragungseinrichtung übertragen wird, nach hinten gezogen wird.

16. Elektrofahrrad nach einem der Ansprüche 1 bis 8 und 15, **dadurch gekennzeichnet, dass** die Drehkraft des Hinterrades beim Fahren über die Antriebskraft-Übertragungseinrichtung auf den Elektromotor übertragen wird, um einen Rückgewinnungsvorgang mittels Drehung durchzuführen.

## Revendications

1. Vélo électrique (1) comprenant :
un corps annulaire d'entraînement par force humaine (13) qui tourne avec une manivelle (7) et sort une force d'entraînement humaine incluant une force de pédale ;
un transmetteur de force d'entraînement (15) enroulé de manière rotative autour du corps annulaire d'entraînement par force humaine (13) et du corps annulaire arrière (14) dans un système sans fin ;
un moteur électrique (20) qui agit comme source d'entraînement pour générer une force d'entraînement auxiliaire ;
un corps annulaire d'entraînement auxiliaire (29) qui reçoit la force d'entraînement auxiliaire générée dans le moteur électrique (20) et transmet la force d'entraînement auxiliaire au transmetteur de force d'entraînement (15) tout en étant engagé avec le transmetteur de force d'entraînement ; et
un dispositif tendeur (40) qui augmente un angle d'enroulement du transmetteur de force d'entraînement (15) par rapport au corps annulaire d'entraînement auxiliaire (29) et applique une tension au transmetteur de force d'entraînement de manière à absorber le relâchement sur une partie inférieure du transmetteur de force d'entraînement, et qui comporte
un corps annulaire de tension (45) engagé avec le transmetteur de force d'entraînement (15) ;
un élément de support (43) supportant de manière pivotante le corps annulaire de tension (45) ; et
un élément de poussée (56) qui applique une force de poussée au corps annulaire de tension (45) de manière à déplacer le corps annulaire de tension dans un sens d'augmentation de la tension des transmetteurs de force d'entraînement (15),
**caractérisé par** un corps annulaire arrière (14) et un frein à rétropédalage (60) pourvus sur une roue arrière (14) ;
et **caractérisé en outre en ce que** le dispositif tendeur comprend :
un mécanisme de positionnement qui règle de manière ajustable une position limite de déplacement du corps annulaire de tension (45) à de multiples positions, y compris une position intermédiaire dans une plage de pivotement de l'élément de support (43), quand le frein à rétropédalage (60) est actionné en faisant tourner les pédales en sens opposé à un sens de rotation d'avancement, permettant au transmetteur de force d'entraînement (15) de recevoir une tension pour déplacer le corps annulaire de tension (45) en sens opposé à un sens de poussée de la force de poussée.

2. Vélo électrique selon la revendication 1, **caractérisé en ce que** le corps annulaire d'entraînement auxiliaire (29) et le corps annulaire de tension (45) sont engagés avec une partie du transmetteur de force d'entraînement du même côté, et le mécanisme de positionnement régule de manière ajustable une position limite de déplacement du corps annulaire de tension quand une tension plus importante est appliquée à la partie engagée du transmetteur de force d'entraînement avec le corps annulaire d'entraînement auxiliaire et le corps annulaire de tension qu'à l'autre partie du transmetteur de force d'entraînement.

3. Vélo électrique selon l'une des revendications 1 et 2, **caractérisé en ce qu'**il comprend en outre une unité d'entraînement à moteur (10) agencée à une position intermédiaire entre une roue avant (3) et la roue arrière (4), l'unité d'entraînement à moteur étant pourvue du moteur électrique et du corps annulaire d'entraînement auxiliaire.

4. Vélo électrique selon l'une quelconque des revendications 1 à 3, **caractérisé en ce que** le dispositif tendeur est attaché à l'unité d'entraînement à moteur pourvue du moteur électrique et du corps annulaire d'entraînement auxiliaire.

5. Vélo électrique selon la revendication 4, **caractérisé en ce que** le mécanisme de positionnement comporte un élément de positionnement en contact avec l'élément de support supportant le corps annulaire de tension de manière pivotante, l'élément de positionnement étant attaché de manière à ajuster une position relative à l'unité d'entraînement à moteur à des positions multiples.

6. Vélo électrique selon la revendication 1, **caractérisé en ce que** lorsque le transmetteur de force d'entraînement présente un relâchement important, le mécanisme de positionnement commute une position régulée parmi les multiples positions et change une position mobile du corps annulaire de tension de manière à réduire le relâchement.

7. Vélo électrique selon la revendication 6, **caractérisé en ce que** le mécanisme de positionnement comprend :
un élément de positionnement en contact avec l'élément de support qui supporte le corps annulaire de tension de manière pivotante ;
un dispositif de poussée qui pousse l'élément de support dans une direction de séparation du corps annulaire de tension par rapport au corps annulaire d'entraînement auxiliaire via l'élément de positionnement ; et
un mécanisme de blocage qui évite à l'élément de support de se déplacer dans une direction de déplacement du corps annulaire de tension proche du corps annulaire d'entraînement auxiliaire via l'élément de positionnement.

8. Vélo électrique selon l'une quelconque des revendications 1 à 7, **caractérisé en ce que** le mécanisme de positionnement régule de manière ajustable une position limite de déplacement quand la partie inférieure du transmetteur de force d'entraînement est tirée vers l'avant en faisant tourner une manivelle en sens opposé au sens d'avancement avec les pédales.

9. Vélo électrique selon la revendication 1, **caractérisé en ce que** le mécanisme de positionnement régule de manière ajustable la position limite à de multiples positions tout en évitant continuellement que le corps annulaire de tension et l'élément de support ne se déplacent en sens opposé au sens de poussée de la force de poussée.

10. Vélo électrique selon la revendication 1, **caractérisé en ce que** le mécanisme de positionnement régule de manière ajustable la position limite aux multiples positions tout en évitant continuellement que le corps annulaire de tension et l'élément de support ne se déplacent en sens opposé au sens de poussée de la force de poussée.

11. Vélo électrique selon la revendication 1, **caractérisé en ce que** l'élément de poussée exerce une force de poussée inférieure à la tension générée pour tirer le transmetteur de force d'entraînement quand les pédales sont mises en rotation vers l'arrière.

12. Vélo électrique selon la revendication 1, **caractérisé en ce que** des rotations d'un vilebrequin vers l'avant et vers l'arrière sont transmises à un pignon avant en l'absence d'un embrayage à roue libre ou d'un mécanisme à cliquet sur une voie de chemin de transmission de force d'entraînement entre le vilebrequin et le pignon avant.

13. Vélo électrique selon l'une quelconque des revendications 1 à 12, **caractérisé en ce qu'**il comprend en outre un détecteur de force d'entraînement humaine pour détecter une force d'entraînement humaine incluant une force de pédale, le détecteur de force d'entraînement humaine étant capable de détecter une force d'entraînement humaine transmise sans contact par le vilebrequin au chemin de transmission, le vilebrequin pouvant tourner en sens opposé au sens d'avancement.

14. Vélo électrique selon la revendication 13, **caractérisé en ce que** le détecteur de force d'entraînement humaine est un capteur de couple magnétostrictif.

15. Vélo électrique selon l'une quelconque des revendications 1 à 8, **caractérisé en ce que** le mécanisme de positionnement régule de manière ajustable une position limite de déplacement quand la partie inférieure du transmetteur de force d'entraînement est tirée vers l'arrière à l'aide d'une force de rotation de la roue arrière transmise au transmetteur de force d'entraînement durant le déplacement.

16. Vélo électrique selon l'une quelconque des revendications 1 à 8 et 15, **caractérisé en ce que** la force de rotation de la roue arrière est transmise au moteur électrique via le transmetteur de force d'entraînement durant le déplacement de manière à mettre en oeuvre une opération de régénération par rotation.
